# EUROPEAN PATENT SPECIFICATION

(11) **EP 2 119 585 B1**
(45) Date of publication and mention of the grant of the patent: **01.08.2012**
(21) Application number: 08721666.9
(22) Date of filing: 04.03.2008
(51) Int. Cl.: B60K 6/40, B60K 6/26, B60K 6/28, B60K 6/445, B60K 15/04, B60L 9/18, B60L 11/12, B60L 11/14

(54) **VEHICLE**
FAHRZEUG
VÉHICULE

(30) Priority: 06.03.2007 JP 2007056036
(43) Date of publication of application: 18.11.2009
(73) Proprietor: Toyota Jidosha Kabushiki Kaisha, Toyota-shi Aichi 471-8571 (JP)
(72) Inventor: OYOBE, Hichirosai c/o TOYOTA JIDOSHA KABUSHIKI KAISHA, Toyota-shi Aichi-ken 471-8571 (JP)
(74) Representative: TBK
(86) International application number: PCT/JP2008/054250
(87) International publication number: WO 2008/111547

(56) References cited:
- WO-A1-99/30412
- WO-A1-2007/129759
- JP-A- 04 334 906
- JP-A- 07 193 910
- JP-A- 09 285 022
- JP-A- 10 117 444
- JP-A- 10 136 510
- JP-A- 2000 238 541
- JP-A- 2000 253 511
- JP-A- 2001 105 903
- JP-A- 2001 239 847
- JP-A- 2001 526 455
- JP-A- 2002 374 604
- JP-A- 2005 204 361
- JP-A- 2005 318 682
- JP-A- 2007 015 537
- US-A1- 2007 027 594
- US-B1- 6 536 547

## Description

### Technical Field

The present invention relates to a vehicle, and particularly relates to a vehicle to which different types of energy sources are supplied.

### Background Art

Various types of environment-friendly hybrid vehicles and others have conventionally been proposed. Regarding a hybrid vehicle proposed in Japanese Patent Laying-Open No. 08-154307, for example, there is proposed a hybrid vehicle that guides a driver for running without the help of an internal combustion engine to thereby suppress air pollution.

However, in the hybrid vehicle described in Japanese Patent Laying-Open No. 08-154307 described above, the positional relation between a filler opening and a charge unit is neither described nor suggested.

Accordingly, there may be a case where the filler opening and the charge unit are disposed on the same lateral surface of the hybrid vehicle. If the charge unit and the filler opening are disposed as such, a worker that performs a charge operation and a power feed operation may simultaneously perform an oiling operation and the charge operation. However, if the worker tries to simultaneously perform the oiling operation and the charge operation in the case where the power feed unit and the oiling unit are disposed on the same lateral surface, there arises a problem of increased tendency for the worker to confuse between the filler opening and the charge unit.

The document US 6 536 547 B1 discloses a hybrid vehicle which comprises an internal combustion engine as well as a direct current motor for driving the hybrid vehicle. A combustible material storage device is provided, which communicates with an orifice for enabling the charging or filling with a combustible fuel. An input plug is provided for charging the vehicle's battery.

Furthermore, the document US 2007/027 594 A1 discloses a vehicle comprising at least one fuel tank, wherein a first and a second fuel inlet are provided on opposing lateral surfaces of the vehicle, which communicate with the at least one fuel tank for filling fuel into the fuel tank.

Moreover, the document WO 99/30412 A1 discloses an apparatus and method for generating electrical power from multiple vehicles powered by fuel cells while the vehicles are parked. Therefore, the fuel cell powered vehicle is provided with an inlet for introducing a gaseous fuel input (e. g. natural gas or hydrogen for powering the fuel cell) and a connector for connecting the vehicle with an electric power grid in order to output the generated electric energy while parking, which is generated by the fuel cell.

If a so called hybrid vehicle is driven by its owner, the driver will know which inlet has to be used for providing for example fuel and which inlet has to be used for example for charging the batteries of the hybrid vehicle in case of a so called plug-in hybrid. Nowadays, however, these vehicles are more and more driven by people who are not so familiar with the car. For example, if hybrid vehicles are used as company cars or rental cars, there is a risk that these inlets are confused. Even more, if the hybrid vehicle does not comprise a combustion engine driven by fuel, but an engine or a fuel cell driven by hydrogen or a gas like natural gas. The connection units used for connecting a charging station for hydrogen or gas with the vehicle are very different from the connection units for fuel and have a high similarity with connection units for electric current. Thus, considering such a hybrid vehicle and drivers not owning the vehicle but only driving the vehicle from time to time, especially the first time as a company or rental car, there is a high risk that connection units might be confused.

### Disclosure of the invention

It is the object underlying the invention to provide a vehicle which is provided with two connection units but no further connection unit allowing two energy sources to be connected with the car to fill a first and a second reservoir unit and allow a hybrid mode for driving the vehicle.

This object is solved by the features of claims 1 and 14. Due to the fact that the first and second connection units are provided at different lateral surfaces of the vehicle, a confusion of the driver which connection unit is provided for which energy source can be easily avoided, wherein clear indications can be given for example by a display or by a sign which is provided in the view of the driver stating that for example, the right connection unit is provided for charging electricity and the left connection unit, for example for providing a hydrogen energy source with the car.

Preferably, the first drive unit is an internal combustion engine driven by the first energy source identified as fuel, and generating drive power. The second drive unit is an electric motor driven by the second energy source identified as electric power, and generating drive power for driving a wheel.

Preferably, the first drive unit is a power generation unit using the first energy source identified as fuel, and generating electric power. The second drive unit is an electric motor generating drive power for driving a wheel, by the second energy source identified as electric power.

Preferably, the first drive unit is a power generation unit using the first energy source identified as fuel, and generating electric power. The second drive unit is an electric motor generating drive power for driving a wheel, by the second energy source identified as electric power. The power generation unit includes an internal combustion engine driven by the second energy source identified as fuel, and a power-generating electric motor driven by drive power obtained from the internal combustion engine.

Preferably, the first drive unit is an internal combustion engine driven by the first energy source identified as fuel, and generating drive power. The second drive unit is an electric motor driven by the second energy source identified as electric power, and generating drive power for driving a wheel. The vehicle further includes a passenger accommodation cabin accommodating a passenger. The electric motor and the internal combustion engine are provided forward in a traveling direction with respect to the passenger accommodation cabin. The first reservoir unit, the second reservoir unit, the first connection unit, and the second connection unit are provided rearward in the traveling direction with respect to the electric motor and the internal combustion engine.

Preferably, the vehicle further includes a passenger accommodation cabin accommodating a passenger, and a loading-and-unloading opening in communication with the passenger accommodation cabin. The first connection unit and the second connection unit are located rearward in a traveling direction with respect to the loading-and-unloading opening.

Preferably, the vehicle further includes a passenger accommodation cabin accommodating a passenger, a loading-and-unloading opening in communication with the passenger accommodation cabin, and a wheel. The wheel includes a front wheel located forward in a traveling direction with respect to the loading-and-unloading opening, and a rear wheel located rearward in the traveling direction with respect to the loading-and-unloading opening. The second connection unit is located upward with respect to the rear wheel.

Preferably, the second energy source is electric power. The second reservoir unit is a power storage device storing the second energy source identified as direct-current electric power. The vehicle further includes a converter connecting the second connection unit and the power storage device, converting the second energy source which is supplied from the second energy source supply unit and identified as alternating-current electric power into the second energy source identified as direct-current electric power, and supplying the direct-current electric power to the power storage device. The converter is disposed on a periphery of the power storage device.

Preferably, the second energy source is electric power. The second reservoir unit is a power storage device storing the second energy source identified as direct-current electric power. The vehicle further includes a converter connecting the second connection unit and the power storage device, converting the second energy source which is stored in the power storage device and identified as direct-current electric power into the second energy source identified as alternating-current electric power, and supplying the alternating-current electric power to the second energy source supply unit. Preferably, the converter is disposed on a periphery of the power storage device.

Preferably, the second energy source is electric power. The second reservoir unit is a power storage device storing said second energy source identified as direct-current electric power. The second drive unit is an electric motor driven by the second energy source identified as alternating-current electric power. The electric motor includes a first electric motor having a first multiphase winding wire and a first neutral point of the first multiphase winding wire, and a second electric motor having a second multiphase winding wire and a second neutral point of the second multiphase winding wire. The second connection unit includes a first interconnection connected to the first neutral point, and a second interconnection connected to the second neutral point. The vehicle further includes a first inverter converting the second energy source which is supplied from the power storage device and identified as direct-current electric power into the second energy source identified as alternating-current electric power, and supplying the alternating-current electric power to the first electric motor, a second inverter converting the second energy source which is supplied from the power storage device and identified as direct-current electric power into the second energy source identified as alternating-current electric power, and supplying the alternating-current electric power to the second electric motor, and an inverter control unit controlling the first and second inverters. The inverter control unit controls the first and second inverters such that alternating-current electric power provided from the second connection unit to the first and second neutral points is converted into direct-current electric power and supplied to the power storage device.

Preferably, the second energy source is electric power. The second reservoir unit is a power storage device storing said second energy source identified as direct-current electric porter. The second drive unit is an electric motor driven by the second energy source identified as alternating-current electric power. The electric motor includes a first electric motor having a first multiphase winding wire and a first neutral point of the first multiphase winding wire, and a second electric motor having a second multiphase winding wire and a second neutral point of the second multiphase winding wire. The second connection unit includes a first interconnection connected to the first neutral point, and a second interconnection connected to the second neutral point. The vehicle further includes a first inverter converting the second energy source which is supplied from the power storage device and identified as direct-current electric power into the second energy source identified as alternating-current electric power, and supplying the alternating-current electric power to the first electric motor, a second inverter converting the second energy source which is supplied from the power storage device and identified as direct-current electric power into the second energy source identified as alternating-current electric power, and supplying the alternating-current electric power to the first electric motor, and an inverter control unit controlling the first and second inverters.

The inverter control unit controls the first inverter and the second inverter such that converting direct-current electric power which is supplied from the power storage device to the first inverter and the second inverter into alternating-current electric power, and supplying the alternating-current electric power to an external load from the second connection unit.

Preferably, the first connection unit and the second connection unit are disposed to be line-symmetric to each other with respect to a centerline of the vehicle, the centerline extending in a front-rear direction of the vehicle.

Preferably, the vehicle further includes a passenger accommodation cabin accommodating a passenger, and a loading-and-unloading opening in communication with the passenger accommodation cabin. The first connection unit and the second connection unit are disposed in a forward section of the vehicle with respect to the loading-and-unloading opening.

Preferably, the vehicle further includes a passenger accommodation cabin accommodating a passenger. One of the first connection unit and the second connection unit is located forward with respect to the passenger accommodation cabin, and the other of the first connection unit and the second connection unit is located rearward with respect to the passenger accommodation cabin.

Preferably, the first drive unit is a power generation unit using the first energy source identified as fuel, and generating electric power. The power generation unit includes an internal combustion engine driven by the second energy source identified as fuel, and a power-generating electric motor driven by drive power obtained from the internal combustion engine. The second drive unit is an electric motor generating drive power for driving a wheel, by the second energy source identified as electric power. The first connection unit includes a reception unit allowing the first energy source supply unit to be connected thereto, and a first lid unit allowing an opening of the reception unit to be opened and closed. The second connection unit includes a connector capable of allowing the second energy source supply unit to be connected thereto, and a second lid unit allowing the connector to be exposed to an outside and to be accommodated in the vehicle.

Preferably, the first drive unit is a fuel cell using the second energy source containing hydrogen elements, and generating electric power. The second drive unit is electric motor generating drive power for driving a wheel, by the second energy source identified as electric power. The first connection unit includes a first reception unit allowing the first energy source supply unit to be connected thereto, and a first lid unit allowing an opening of the reception unit to be opened and closed. The second connection unit includes a connector capable of allowing the first energy source supply unit to be connected thereto, and a second lid unit allowing the connector to be exposed to an outside and to be accommodated in the vehicle.

In still another aspect, a vehicle according to the present invention includes: a power generation unit generating electric power by a first energy source; a first reservoir unit reserving the first energy source; a first connection unit allowing a first energy source supply unit to be connected thereto, and guiding the first energy source supplied from the first energy source supply unit to the first reservoir unit; a drive unit driven by a second energy source different from the first energy source; a second reservoir unit reserving the second energy source; and a second connection unit allowing a second energy source supply unit to be connected thereto, and guiding the second energy source supplied from the second energy source supply unit to the second reservoir unit. The first connection unit is provided at one lateral surface of the vehicle, and the second connection unit is provided at the other lateral surface of the vehicle, the one lateral surface and the other lateral surface being arranged in a width direction of the vehicle.

### Brief Description of the Drawings

Fig. 1 is a perspective view of a hybrid vehicle according to a first embodiment.
Fig. 2 is a perspective view of the hybrid vehicle seen from the other lateral surface side.
Fig. 3 is a block diagram of the hybrid vehicle according to the first embodiment.
Fig. 4 is a perspective view that shows a schematic configuration of a body of a vehicle body of the hybrid vehicle.
Fig. 5 is a side view of the hybrid vehicle on one lateral surface side.
Fig. 6 is a side view of the hybrid vehicle on the other lateral surface side.
Fig. 7 is a side view that shows a modification of the position of a power feed and/or charge unit.
Fig. 8 is a schematic block diagram of the hybrid vehicle according to the first embodiment.
Fig. 9 is a schematic configuration diagram that shows a modification of the first embodiment.
Fig. 10 is a schematic block diagram of a hybrid vehicle according to a second embodiment.
Fig. 11 is a schematic diagram that schematically shows a configuration of a fuel cell vehicle according to a third embodiment.
Fig. 12 is a side view of a hybrid vehicle according to a fourth embodiment on a lateral surface side.
Fig. 13 is a side view of the hybrid vehicle according to the fourth embodiment on another lateral surface side.
Fig. 14 is a side view of a hybrid vehicle according to a fifth embodiment on a lateral surface side.
Fig. 15 is a side view of the hybrid vehicle according to the fifth embodiment on another lateral surface side.
Fig. 16 is a side view that shows a modification of the hybrid vehicle according to the fifth embodiment.
Fig. 17 is a side view that shows the modification of the hybrid vehicle according to the fifth embodiment.
Fig. 18 is a side view of a hybrid vehicle according to a sixth embodiment on a lateral surface side.
Fig. 19 is a side view of the hybrid vehicle according to the sixth embodiment on another lateral surface side.
Fig. 20 is a side view that shows a modification of the hybrid vehicle according to the sixth embodiment.
Fig. 21 is a side view that shows the modification of the hybrid vehicle according to the sixth embodiment.
Fig. 22 is a side view that shows another modification of the hybrid vehicle according to the sixth embodiment.
Fig. 23 is a side view that shows the other modification of the hybrid vehicle according to the sixth embodiment.
Fig. 24 is a side view that shows still another modification of the hybrid vehicle according to the sixth embodiment.
Fig. 25 is a side view that shows the still other modification of the hybrid vehicle according to the sixth embodiment.

### Best Modes for Carrying Out the Invention

### (First Embodiment)

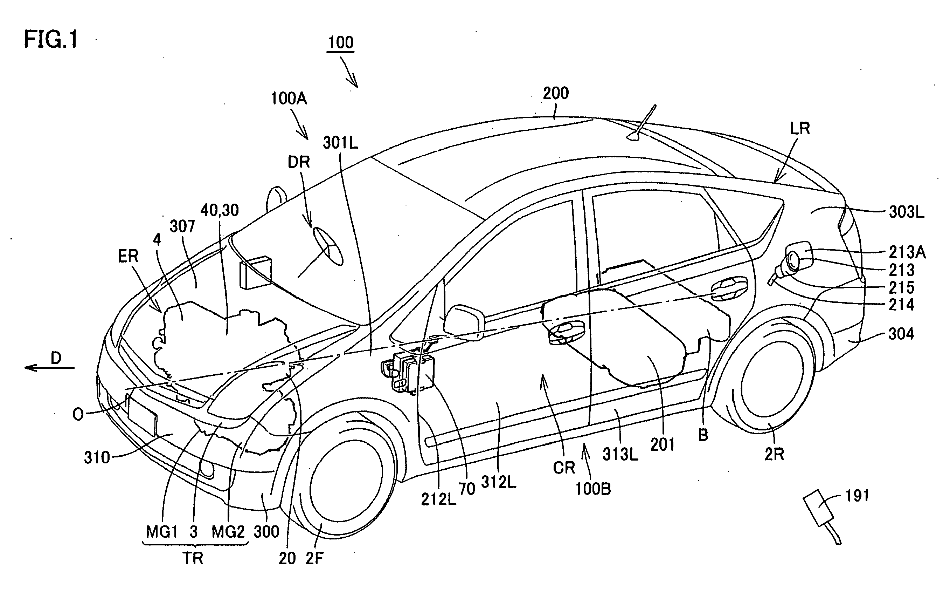

A hybrid vehicle according to a first embodiment will be described with reference to Fig. 1 to Fig. 9. The same or corresponding configurations are provided with the same reference characters, and the description thereof will not be repeated.

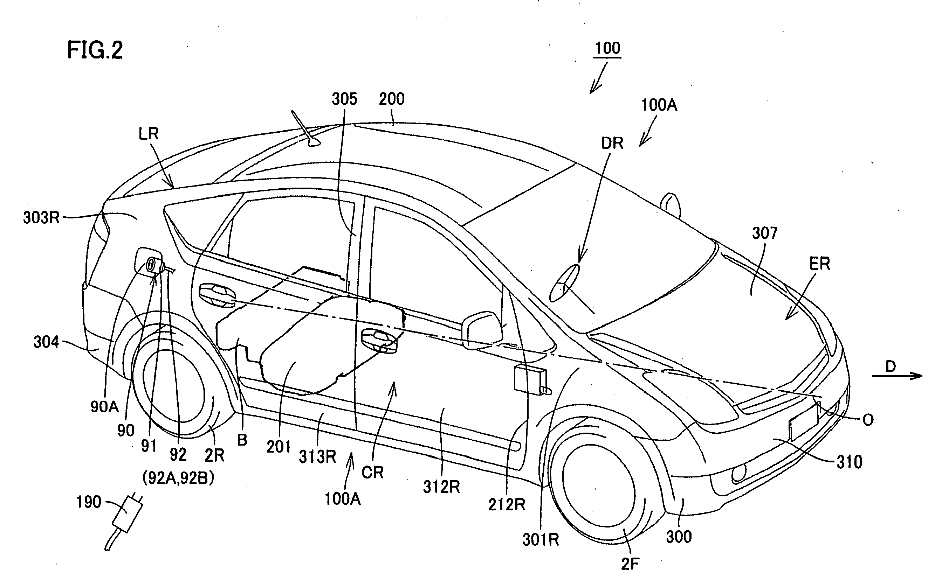

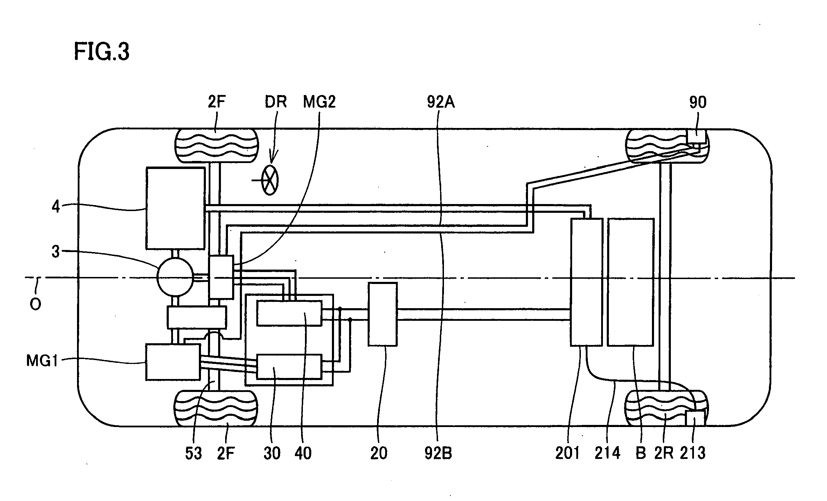

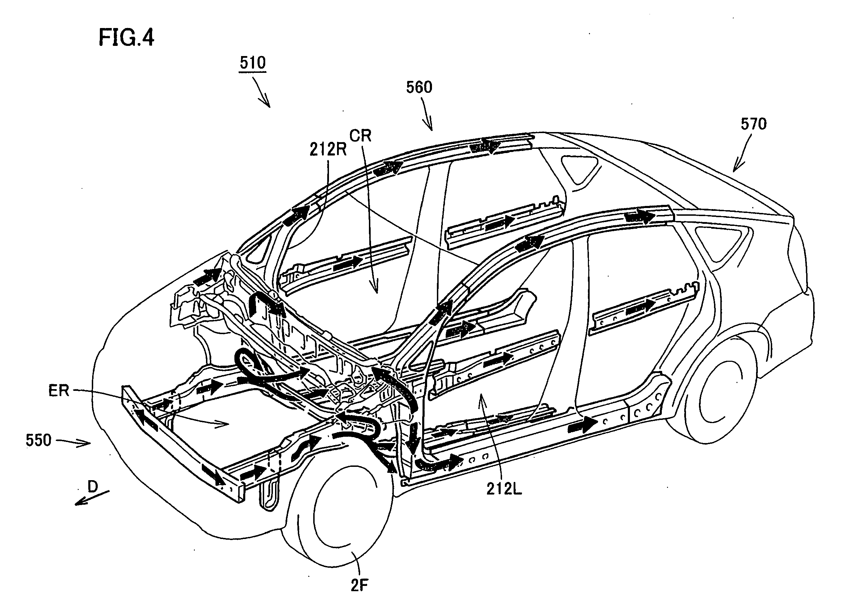

Fig. 1 is a perspective view of a hybrid vehicle 100 according to the present embodiment, and is identified as a perspective view seen from one lateral surface side. Fig. 2 is a perspective view of the hybrid vehicle seen from the other lateral surface side. Fig. 3 is a block diagram of hybrid vehicle 100 according to the present embodiment. Fig. 4 is a perspective view that shows a schematic configuration of a body 510 of a vehicle body 200 of hybrid vehicle 100.

As shown in Fig. 1 to Fig. 4, hybrid vehicle 100 includes vehicle body 200 formed of a body and an exterior part, a pair of front wheels (wheels) 2F provided forward in a traveling direction D of hybrid vehicle 100, and rear wheels (wheels) 2R provided rearward in traveling direction D.

Vehicle body 200 includes an engine compartment ER provided in traveling direction D of hybrid vehicle 100, a passenger accommodation cabin CR adjacent to engine compartment ER rearward in traveling direction D, and a luggage room LR adjacent to passenger accommodation cabin CR rearward in traveling direction D.

As shown in Fig. 4, a Monocoque Body, for example, is adopted as body 510 of vehicle body 200. Body 510 includes a front wall portion 550 provided on a front side in traveling direction D and defining engine compartment ER, an accommodation wall portion 560 defining passenger accommodation cabin CR, and a rear wall portion 570 provided rearward in traveling direction D of vehicle body 200 with respect to accommodation wall portion 560.

At a lateral surface of body 510, there are formed openings 212L, 212R which are in communication with passenger accommodation cabin CR and enable a passenger to enter and leave the passenger accommodation cabin CR.

Rear wall portion 570 deforms when an impact is exerted thereon, so that impactive force transmitted to passenger accommodation cabin CR is reduced.

A plurality of exterior parts are mounted on a surface of body 510 configured as such, to configure vehicle body 200.

In Fig. 1 and Fig. 2, for example, the exterior parts include a front face 310 provided on the front side of vehicle body 200, a front bumper 300 provided under front face 310, front fenders 301L, 301R each provided to cover a lateral surface of front wall portion 550 shown in Fig. 4, and front doors 312L, 312R and rear doors 313L, 313R provided to allow openings 212L, 212R to be opened and closed.

The exterior parts further include a hood 307 serving as an upper lid for engine compartment ER, rear fenders 303L, 303R provided rearward in traveling direction D with respect to rear doors 313L, 313R, and a rear bumper 304 provided below rear fenders 303L, 303R.

Passenger accommodation cabin CR is provided with a driver's seat DR for manipulating hybrid vehicle 100, an assistant driver's seat adjacent to the driver's seat in a width direction of hybrid vehicle 100, and a rear seat provided behind the assistant driver's seat and driver's seat DR. In the example shown in Fig. 1, driver's seat DR is shifted to a right lateral surface (one lateral surface) 100A side of hybrid vehicle 100 with respect to a centerline O of hybrid vehicle 100 extending in traveling direction D.

As shown in Fig. 1, engine compartment ER accommodates an engine 4 identified as an internal combustion engine that generates drive power for driving front wheels 2F.

At a portion located under the rear seat in passenger accommodation cabin CR located rearward in traveling direction D with respect to engine compartment ER, there is provided a fuel tank 201 that accommodates petrol, ethanol (a liquid fuel), propane gas (gas fuel), and the like. A battery (power storage device) B such as a fuel cell or a large-capacity capacitor is disposed rearward in traveling direction D with respect to the rear seat. As such, fuel tank (second reservoir unit) 201 and battery B are located rearward in traveling direction D with respect to engine 4.

Here, hybrid vehicle 100 is provided with a fuel supply unit (second connection unit) 213 capable of allowing a fuel supply connector (first energy source supply unit) 191 to be connected thereto, and supplying fuel such as petrol or ethanol to fuel tank 201. Therefore, it is possible to refill fuel tank 201 with fuel.

In Fig. 2, hybrid vehicle 100 is also provided with a charge unit (second connection unit) 90 capable of allowing a connector (second energy source supply unit) 190, which is connected to an external alternating-current power supply, to be connected thereto (to be detachable therefrom and attachable thereto).

In Fig. 1 and Fig. 3, engine compartment ER further accommodates a transaxle TR, in addition to engine 4 identified as an internal combustion engine that generates drive power for driving front wheels 2F.

Transaxle TR includes an electric motor MG2 functioning as a power generator, an MG1 generating drive power for driving front wheels 2F, a step-up converter 20 stepping up electric power obtained from battery (first reservoir unit) B, an inverter 30 converting direct-current electric power obtained from step-up converter 20 into alternating-current electric power and supplying the alternating-current electric power to electric motor MG1, an inverter 40 converting alternating-current electric power supplied from electric motor MG1 into direct-current electric power and supplying the direct-current electric power to battery B, and a power split device 3 formed of a planetary gear and the like.

Engine 4 combusts the fuel such as petrol or ethanol reserved in fuel tank 201, to thereby generate drive power. Electric motor MG2, which functions as a power generator, is driven by the drive power obtained from engine 4 being driven, and can generate electric power. The electric power generated by electric motor MG2 is supplied to the battery or supplied to electric motor MG1 via inverter 40. Electric motor MG1 is driven by electric power supplied from battery B via inverter 30, and transmits drive power to a shaft connected to front wheels 2F, via a differential mechanism.

Here, engine 4 is shifted to lateral surface 100A side, and transaxle TR is shifted to (left) lateral surface 100B side, with respect to centerline O. Therefore, when engine 4 and transaxle TR are considered as one unit, its center of gravity is located on centerline O or in proximity thereto, so that the balance of hybrid vehicle 100 in the width direction is kept. Further, the center of gravity of each of battery B and fuel tank 201 is also located on centerline O or in proximity thereto.

Here, in Fig. 2, charge unit 90 includes a connection unit 91 provided at body 510 and capable of allowing connector 190 to be connected thereto, a lid unit 90A formed at rear fender 303R and allowing connection unit 91 to be exposed to the outside and to be accommodated in hybrid vehicle 100, and interconnections 92A, 92B connected to connection unit 91. Here, connector 190 is identified as a charging connector that supplies electric power to battery B to charge battery B, and is identified as a connector for supplying electric power supplied from a commercial power supply (e.g. a single-phase alternating current of 100V in Japan) to battery B. For example, an example of connector 190 is a plug connected to a household power supply of general household.

A method of giving and receiving electric power between connector 190 and charge unit 90 may be of a contact (conductive) type in which at least a part of connector 190 is in direct contact with at least a part of charge unit 90, or may be of a non-contact (inductive) type.

Interconnections 92A, 92B are connected to neutral points of electric motors MG1, MG2, and electric power supplied from connector 190 is supplied to battery B via electric motors MG1, MG2, inverters 30, 40, and step-up converter 20. Here, the alternating-current electric power supplied from connector 190 is converted into direct-current electric power by inverters 30, 40. The direct-current electric power is then supplied to battery B for charging.

Fuel supply unit 213 includes a nozzle reception unit 215 provided at body 510 and having an opening, a supply pipe 214 connected to nozzle reception unit 215 and fuel tank 201, and a lid unit 213A provided at an exterior part and allowing the opening of nozzle reception unit 215 to be opened and closed.

Nozzle reception unit 215 is capable of receiving a supply nozzle of fuel supply connector 191 provided externally to hybrid vehicle 100. The supplied fuel such as petrol is supplied to fuel tank 201 via supply pipe 214.

Here, as shown in Fig. 2, charge unit 90 is provided at one lateral surface 100A, and fuel supply unit 213 is provided at the other lateral surface 100B, lateral surfaces 100A, 100B being arranged in the width direction of hybrid vehicle 100.

Here, in hybrid vehicle 100, a portion located forward in traveling direction D and a portion located rearward in traveling direction D generally have a high probability of being damaged by external force exerted from an outside. In contrast, a portion of the lateral surface is less likely to be damaged.

Charge unit 90 and fuel supply unit 213 are provided at lateral surfaces 100A, 100B of hybrid vehicle 100, and hence even if hybrid vehicle 100 is used for many years, charge unit 90 and fuel supply unit 213 are prevented from being damaged by an impact or the like exerted from the outside.

Further, even if one of lateral surfaces 100A, 100B is damaged, charge unit 90 and fuel supply unit 213 are provided at the different lateral surfaces, respectively, and hence charge unit 90 and fuel supply unit 213 can be prevented from being damaged simultaneously.

Further, charge unit 90 and fuel supply unit 213 are provided at the different lateral surfaces, respectively, and apart from each other, so that the worker that performs a charge operation and a fuel supply operation can be prevented from confusing between charge unit 90 and fuel supply unit 213.

Further, charge unit 90 and fuel supply unit 213 are provided at different lateral surfaces 100A, 100B, respectively, and are spaced apart from each other, so that the worker completes one of, and then starts the other of, the charge operation and the fuel supply operation. Therefore, the worker can independently perform the charge operation and the fuel supply operation in a reliable manner.

Here, in the example shown in Fig. 1 and Fig. 2, charge unit 90 is provided on lateral surface 100A side on driver's seat DR side, and is close to driver's seat DR. Therefore, in performing the charge operation, the driver finds it easy to start the charge operation.

Here, in the example shown in Fig. 1 to Fig. 3, charge unit 90 and fuel supply unit 213 are opposed to each other in the width direction of hybrid vehicle 100. In other words, charge unit 90 and fuel supply unit 213 are provided at positions line-symmetric with respect to centerline O extending in traveling direction D of the vehicle, respectively.

Therefore, a hole portion formed at rear fender 303R and capable of receiving charge unit 90 and a hole portion formed at rear fender 303L and capable of receiving fuel supply unit 213 are also opposed to each other in the width direction of hybrid vehicle 100.

Therefore, it is possible to suppress the difference in stiffness between lateral surface 100A side and lateral surface 100B side. Consequently, even if impactive force is exerted from the rear side, for example, the impactive force can uniformly be absorbed by lateral surface 100A side and lateral surface 100B side.

The present invention is not limited to the case where charge unit 90 and fuel supply unit 213 are formed at rear fenders 303L, 303R. For example, charge unit 90 and fuel supply unit 213 may also be provided at front fenders 301 L, 301 R, respectively, and provided at positions line-symmetric with respect to centerline O extending along traveling direction D of the vehicle. In this case, even if impactive force is exerted from the front side of the vehicle, the impactive force can uniformly be absorbed by front fenders 301L, 301R, and hence it is possible to suppress propagation of the impactive force to passenger accommodation cabin CR.

Here, charge unit 90 is provided at a position apart from engine compartment ER. Therefore, it is easy to ensure a space for accommodating charge unit 90, and it is possible to prevent charge unit 90 from being in contact with other apparatuses and being damaged or the like.

Further, charge unit 90 is spaced apart from engine compartment ER, so that charge unit 90 is prevented from being deteriorated owing to heat generated from engine 4. Therefore, necessity to thermally protecting charge unit 90 is decreased, and hence the cost can be reduced.

Here, fuel tank 201 is also disposed rearward in traveling direction D with respect to engine compartment ER, and fuel supply unit 213 is also disposed rearward in traveling direction D with respect to engine compartment ER. Therefore, it is possible to reduce a conduit length of supply pipe 214 that allows fuel supply unit 213 and fuel tank 201 to be in communication with each other.

Weight balance of hybrid vehicle 100 in the front-rear rear can be kept by accommodating transaxle TR and engine 4 in engine compartment ER, and locating battery B and fuel tank 201 rearward in traveling direction D with respect to engine compartment ER.

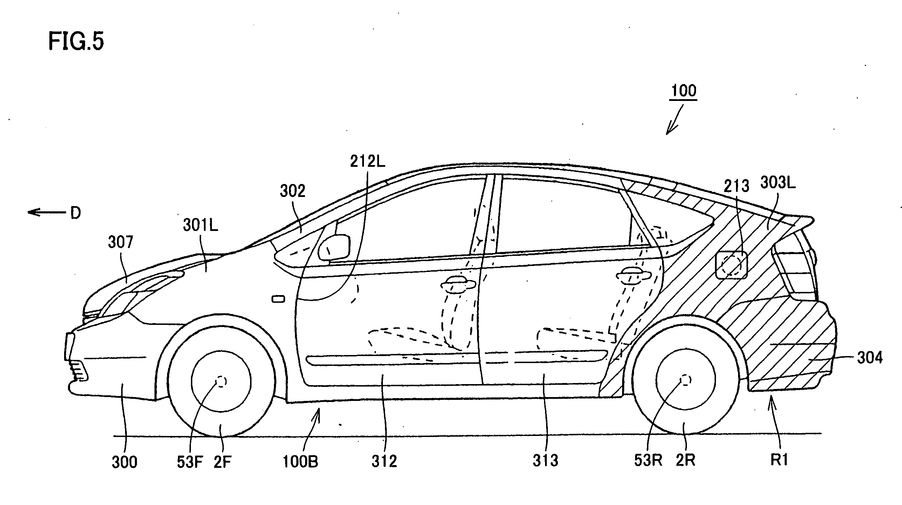

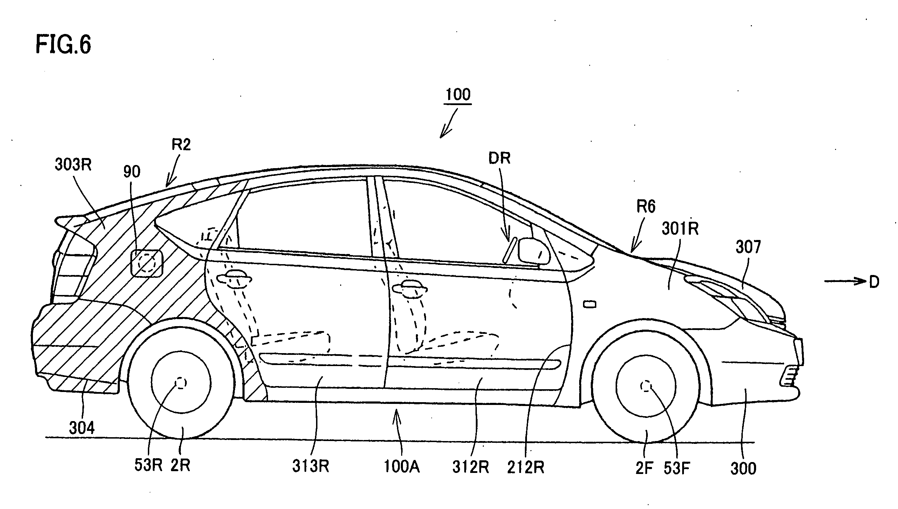

Fig. 5 is a side view of hybrid vehicle 100 on lateral surface 100B side, and Fig. 6 is a side view of hybrid vehicle 100.

In Fig. 5, fuel supply unit 213 is formed in a region R1 located rearward in traveling direction D with respect to opening 212L, at lateral surface 100B of hybrid vehicle 100. Region R1 is identified as a region that includes rear fender 303L and a lateral surface portion of rear bumper 304.

In Fig. 6, charge unit 90 is formed in a region R2 located rearward in traveling direction D with respect to opening 212R, at lateral surface 100A of hybrid vehicle 100. Region R2 includes rear fender 303R and a lateral surface portion of rear bumper 304.

Here, in rear wall portion 570 of body 510 shown in Fig. 4, a portion where each of regions R1, R2 is located is flat. Therefore, even if a through hole capable of receiving charge unit 90 is formed at the portion where each of the above-described regions R1, R2 is located in rear wall portion 570, a portion located around the through hole can sufficiently receive external force exerted from an outside, so that prescribed stiffness is ensured with ease.

As shown in Fig. 5 and Fig. 6, fuel supply unit 213 is located above rear wheel 2R, and charge unit 90 is also located above rear wheel 2R.

Therefore, a position of each of charge unit 90 and fuel supply unit 213 in a height direction is located at a position that allows the worker to perform an operation with ease, and hence working efficiency can be improved.

Further, charge unit 90 is located rearward in traveling direction D with respect to the center of a shaft 53R connected to rear wheels 2R. Therefore, when rear door 313R is turned while connector 190 shown in Fig. 1 is connected to charge unit 90, it is possible to prevent rear door 313R from being in contact with connector 190.

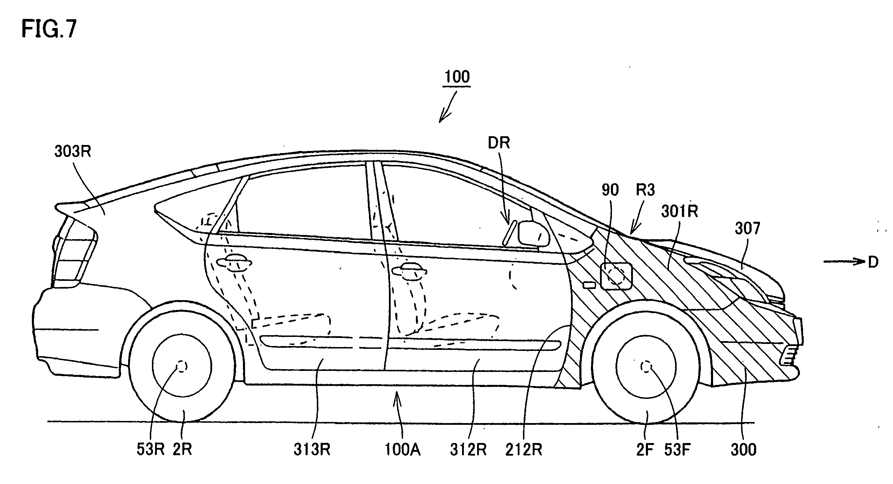

Fig. 7 is a side view that shows a modification of the position of charge unit 90. In the example shown in Fig. 7, charge unit 90 is disposed in a region R3 in lateral surface 100A, which region R3 is located forward in traveling direction D with respect to opening 212R. Region R3 is identified as a region that includes front fender 301 R and a lateral surface portion of front bumper 300. By disposing charge unit 90 at such a position, a distance between electric motors MG1, MG2 and charge unit 90 can be reduced, so that the length of interconnections 92A, 92B can be reduced.

Further, by disposing charge unit 90 in region R3, it is possible to reduce a distance from driver's seat DR, so that the driver can immediately perform an operation for charging battery B. Here, front door 312R is rotatably supported at its side portion on region R3 side, and the other side portion thereof is freely turnable.

Therefore, even if front door 312R is turned while connector 190 shown in Fig. 1 is connected to charge unit 90, it is possible to prevent connector 190 and an interconnection connected to connector 190 from being in contact with front door 312R.

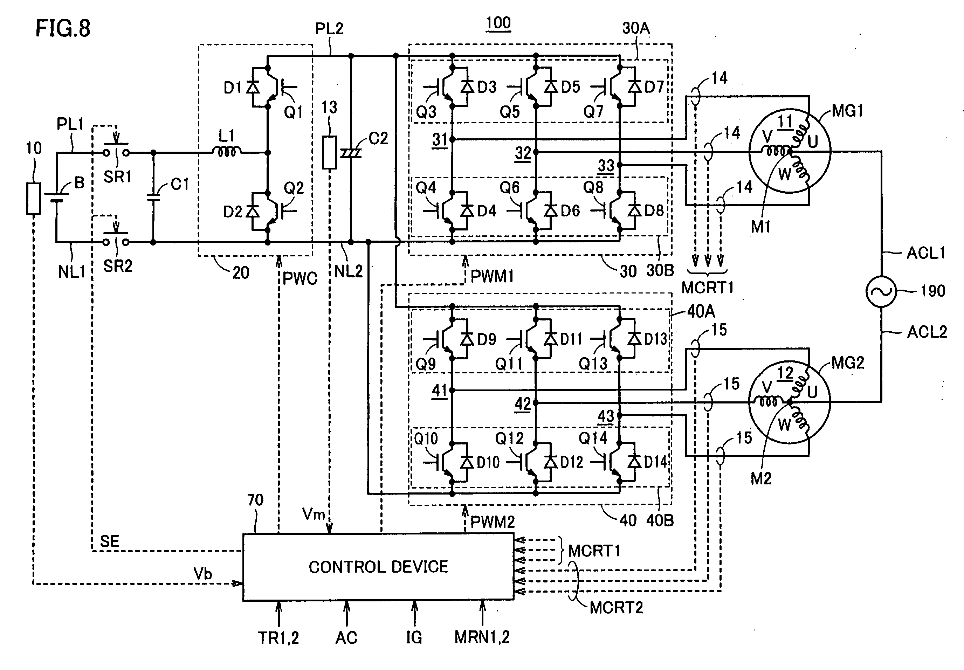

Fig. 8 is a schematic block diagram of hybrid vehicle 100 according to the embodiment of the present invention. With reference to Fig. 8, a method of charging battery B with an alternating current provided through connector 190 will be described. A positive electrode of battery B is connected to a positive line PL1, and a negative electrode of battery B is connected to a negative line NL1. Capacitor C1 is connected between positive line PL1 and negative line NL1. Step-up converter 20 is connected between positive line PL1 and negative line NL1, and a positive line PL2 and a negative line NL2. Capacitor C2 is connected between positive line PL2 and negative line NL2. Inverter 30 is connected between positive line PL2 and negative line NL2, and electric motor MG 1. Inverter 40 is connected between positive line PL2 and negative line NL2, and electric motor MG2.

Electric motor MG1 includes a three-phase coil 11 as a stator coil, and electric motor MG2 includes a three-phase coil 12 as a stator coil.

Step-up converter 20 includes a reactor L1, NPN transistors Q1, Q2, and diodes D1, D2. Reactor L1 has one end connected to positive line PL1, and has the other end connected to a midpoint between NPN transistor Q1 and NPN transistor Q2, namely, connected between an emitter of NPN transistor Q1 and a collector of NPN transistor Q2. NPN transistors Q1, Q2 are connected in series between positive line PL1, and negative lines NL1, NL2. A collector of NPN transistor Q1 is connected to positive line PL2 of inverters 30, 40, and an emitter of NPN transistor Q2 is connected to negative lines NL1, NL2. Further, diodes D1, D2 that allow a current to flow from an emitter side to a collector side are disposed between the collector and the emitter of NPN transistors Q1, Q2, respectively.

Inverter 30 is formed of a U-phase arm 31, a V-phase arm 32, and a W-phase arm 33. U-phase arm 31, V-phase arm 32, and W-phase arm 33 are provided in parallel between positive line PL2 and negative line NL2.

U-phase arm 31 is formed of NPN transistors Q3, Q4 connected in series. V-phase arm 32 is formed of NPN transistors Q5, Q6 connected in series. W-phase arm 33 is formed of NPN transistors Q7, Q8 connected in series. Further, diodes D3-D8 that allow a current to flow from an emitter side to a collector side are connected between the collector and the emitter of NPN transistors Q3-Q8, respectively.

Midpoints ofU, V, and W-phase arms in inverter 30 are connected to U, V, and W-phase ends ofU, V, and W-phase coils in three-phase coil 11 included in electric motor MG1, respectively. In other words, electric motor MG1 is a three-phase permanent magnet motor, and is configured such that one end of each of the three coils of U, V, and W phases is all connected to a neutral point M1. The other end of the U-phase coil is connected to a midpoint between NPN transistors Q3, Q4, the other end of the V-phase coil is connected to a midpoint between NPN transistors Q5, Q6, and the other end of the W-phase coil is connected to a midpoint between NPN transistors Q7, Q8.

Inverter 40 is connected in parallel with inverter 30, between the terminals of capacitor C2. Inverter 40 is formed of a U-phase arm 41, a V-phase arm 42, and a W-phase arm 43. U-phase arm 41, V-phase arm 42, and W-phase arm 43 are provided in parallel between positive line PL2 and negative line NL2.

U-phase arm 41 is formed of NPN transistors Q9, Q10 connected in series. V-phase arm 42 is formed of NPN transistors Q11, Q12 connected in series. W-phase arm 43 is formed of NPN transistors Q13, Q14 connected in series. NPN transistors Q9-Q14 correspond to NPN transistors Q3-Q8 in inverter 30, respectively. In other words, inverter 40 has the same configuration as that of inverter 30. Diodes D9-D14 that allow a current to flow from the emitter side to the collector side are connected between the collector and the emitter of NPN transistors Q9-Q14, respectively.

Midpoints of U, V, and W-phase arms in inverter 40 are connected to U, V, and W-phase ends ofU, V, and W-phase coils in three-phase coil 12 included in electric motor MG2, respectively. In other words, electric motor MG2 is also a three-phase permanent magnet motor, and is configured such that one end of each of the three coils of U, V, and W phases is all connected to a neutral point M2. The other end of the U-phase coil is connected to a midpoint between NPN transistors Q9, Q10, the other end of the V-phase coil is connected to a midpoint between NPN transistors Q11, Q12, and the other end of the W-phase coil is connected to a midpoint between NPN transistor Q13, Q14.

Battery B is made of a secondary battery such as a nickel-hydrogen battery or a lithium-ion battery. Voltage sensor 10 detects a battery voltage Vb outputted from battery B, and outputs the detected battery voltage Vb to control device 70. System relays SR1, SR2 are turned on/off by a signal SE from control device 70. More specifically, system relays SR1, SR2 are turned on by signal SE at an H (logic high) level obtained from control device 70, and turned off by signal SE at an L (logic low) level obtained from control device 70. Capacitor C1 smoothes a direct-current voltage supplied from battery B, and supplies the smoothed direct-current voltage to step-up converter 20.

Step-up converter 20 steps up the direct-current voltage supplied from capacitor C1 and supplies the stepped-up direct-current voltage to capacitor C2. More specifically, when step-up converter 20 receives a signal PWC from control device 70, it steps up the direct-current voltage and supplies the stepped-up direct-current voltage to capacitor C2 in accordance with a period during which NPN transistor Q2 is turned on by signal PWC. In this case, NPN transistor Q1 is turned off by signal PWC. Further, step-up converter 20 steps down the direct-current voltage supplied from inverter 30 and/or 40 via capacitor C2, in accordance with signal PWC from control device 70, and charges battery B.

Capacitor C2 smoothes the direct-current voltage provided from step-up converter 20, and supplies the smoothed direct-current voltage to inverters 30, 40. A voltage sensor 13 detects a voltage across capacitor C2, namely, an output voltage Vm of step-up converter 20 (This corresponds to a voltage inputted to inverters 30, 40. The same applies to the following.), and outputs the detected output voltage Vm to control device 70.

When the direct-current voltage is supplied from capacitor C2, inverter 30 converts the direct-current voltage into an alternating-current voltage and drives electric motor MG1, based on a signal PWM1 from control device 70. Electric motor MG1 is thereby driven such that it generates torque specified by a torque command value TR1. Further, during regenerative braking of the hybrid vehicle mounted with a drive power output device, inverter 30 converts an alternating-current voltage generated by electric motor MG1 into a direct-current voltage and supplies the converted direct-current voltage to step-up converter 20 via capacitor C2, based on signal PWM1 from control device 70. Here, regenerative braking herein includes braking that involves regenerative power generation in the case where the driver driving the hybrid vehicle manipulates a foot brake, as well as deceleration (or stop of acceleration) of the vehicle by lifting the foot off an accelerator pedal, during running, to cause regenerative power generation, although the foot brake is not manipulated.

When the direct-current voltage is supplied from capacitor C2, inverter 40 converts the direct-current voltage into an alternating-current voltage and drives electric motor MG2, based on a signal PWM2 from control device 70. Electric motor MG2 is thereby driven such that it generates torque specified by a torque command value TR2. Further, during regenerative braking of the hybrid vehicle mounted with a drive power output device, inverter 40 converts the alternating-current voltage generated by electric motor MG2 into a direct-current voltage and supplies the converted direct-current voltage to step-up converter 20 via capacitor C2, based on signal PWM2 from control device 70.

A current sensor 14 detects a motor current MCRT1 flowing through electric motor MG1, and outputs the detected motor current MCRT1 to control device 70. A current sensor 15 detects a motor current MCRT2 flowing through electric motor MG2, and outputs the detected motor current MCRT2 to control device 70.

Here, in inverters 30, 40 each made of a three-phase bridge circuit, there exist eight patterns of on/off combination in the six transistors. In two out of the eight switching patterns, an interphase voltage becomes zero, and such a voltage state is referred to as a zero voltage vector. Regarding the zero voltage vector, three transistors in the upper arm can be considered as being in the same switching state (all of them are turned on or off), and three transistors in the lower arm can also be considered as being in the same switching state. Therefore, in Fig. 8, the three transistors in the upper arm in inverter 30 are collectively shown as an upper arm 30A, and the three transistors in the lower arm in inverter 30 are collectively shown as a lower arm 30B. Similarly, the three transistors in the upper arm in inverter 40 are collectively shown as an upper arm 40A, and the three transistors in the lower arm in inverter 40 are collectively shown as a lower arm 40B.

As shown in Fig. 8, the zero-phase equivalent circuit can be regarded as a single-phase PWM converter that receives, as an input, single-phase alternating-current electric power provided to neutral points M1, M2 via electric power input lines ACL1, ACL2 of connector 190. Therefore, by changing a zero voltage vector in each of inverters 30, 40 and providing switching control such that each of inverters 30, 40 operates as an arm of the single-phase PWM converter, it is possible to convert the alternating-current electric power inputted through electric power input lines ACL1, ACL2 into direct-current electric power, and output the direct-current electric power to positive line PL2. The converted direct-current voltage is supplied to step-up converter 20 via capacitor C2 to charge battery B.

In the present embodiment, there has been described the case where the present invention is applied to the hybrid vehicle having a Monocoque Body. However, the present invention is not limited thereto. For example, it can also be applied to a framed body.

Further, in the present embodiment, the description has been made based on the so-called series parallel hybrid among hybrid types. However, the present invention is not limited thereto. In other words, the present invention can also be applied to the hybrid type (series hybrid) that includes an engine identified as an internal combustion engine requiring fuel supply, and a running motor that drives a wheel by electric power generated by the engine or/and electric power stored in a battery. Further, the present invention can also be applied to the parallel hybrid that enables both of the engine and the motor to output drive power to a drive shaft.

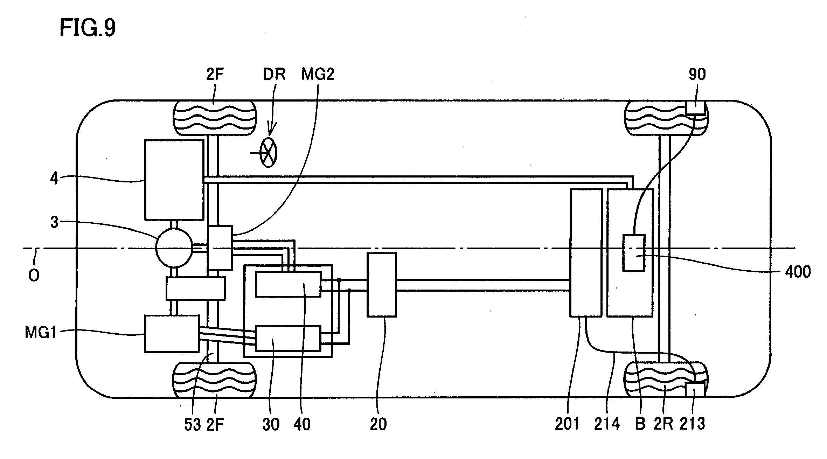

Here, in the hybrid vehicle according to the present embodiment, a method of using neutral points M1, M2 of electric motors MG1, MG2 is adopted as a method of charging battery B. However, the present invention is not limited thereto. For example, Fig. 9 is a schematic configuration diagram that shows a modification of the present embodiment. As shown in Fig. 9, it may be possible to provide a charge-specific device 400, which has a function of an inverter and a function of a DC/DC converter, and use charge-specific device 400 to perform charging.

At this time, by locating charge-specific device 400 on the periphery of battery B, an interconnection length between charge unit 90 and charge-specific device 400, and a distance of an interconnection between charge-specific device 400 and battery B can be reduced.

### (Second Embodiment)

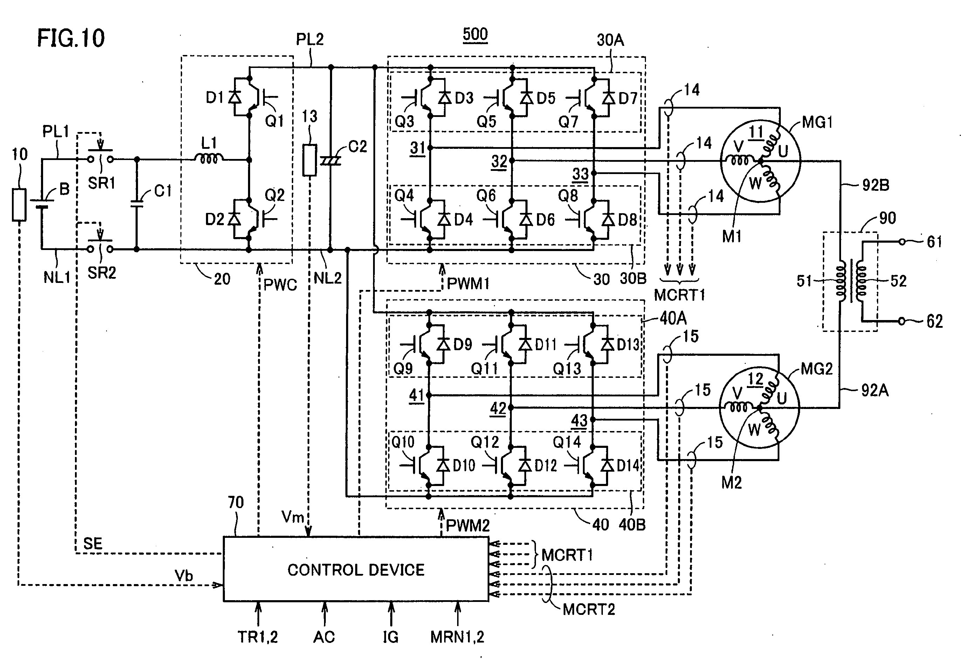

A hybrid vehicle according to a second embodiment will now be described with reference to Fig. 10, and the above-described Fig. 1 to Fig. 9 as appropriate. In Fig. 10, the configurations identical to or corresponding to the reference characters shown in Fig. 1 to Fig. 9 are provided with the same reference characters and the description thereof will not be repeated. Fig. 10 is a schematic block diagram of a hybrid vehicle according to the second embodiment.

In the hybrid vehicle shown in Fig. 10, electric power stored in battery B can be supplied to an external alternating-current power supply via a connector connected to charge unit 90.

Here, in the hybrid vehicle, connector 190 connected to charge unit 90 is identified as a connector for feeding electric power to an outside, capable of supplying electric power with which battery B is charged to an external load.

The connector for feeding electric power to an outside is a connector for supplying electric power from the hybrid vehicle (e.g. a single-phase alternating current of 100V in Japan) to an external load.

In Fig. 10, inverters 30, 40 convert direct-current electric power supplied from battery B via step-up converter 20 into alternating-current electric power for a commercial power supply and drive electric motors MG1, MG2 such that the alternating-current electric power can be outputted from charge unit 90, in accordance with signals PWM1, PWM2 from control device 70.

Charge unit 90 includes a primary coil 51 and a secondary coil 52. Primary coil 51 is connected between neutral point M1 of three-phase coil 11 included in electric motor MG1 and neutral point M2 of three-phase coil 12 included in electric motor MG2. Charge unit 90 converts an alternating-current voltage generated between neutral point M1 of electric motor MG1 and neutral point M2 of electric motor MG2 into an alternating-current voltage for a commercial power supply, and outputs the alternating-current voltage from terminals 61, 62 of charge unit 90.

As to the positional relation between charge unit 90 and the fuel supply unit in the hybrid vehicle according to the present embodiment, the positional relations between charge unit 90 and fuel supply unit 213 in the hybrid vehicle according to the first embodiment can be incorporated.

Thereby, the worker that supplies electric power in battery B to an external load and supplies fuel such as petrol or ethanol to the hybrid vehicle can be prevented from confusing between the connection unit and the fuel supply unit. Furthermore, it is possible to obtain advantages and effects similar to those of hybrid vehicle 100 according to the first embodiment described above.

The hybrid vehicle capable of supplying electric power stored in battery B to an external load has been described in the second embodiment, and the hybrid vehicle capable of charging battery B with electric power supplied from an external power supply has been described in the first embodiment. However, the present invention is not limited thereto.

In other words, regarding the positional relation between the connection unit and the fuel supply unit described above, the positional relations in hybrid vehicle 100 according to the first embodiment are also incorporated into the hybrid vehicle capable of supplying electric power stored in battery B to an external load as well as supplying electric power from an external power supply to battery B. Thereby, the worker that performs an operation for charging battery B, an operation for feeding electric power to an external load, and a fuel supply operation can be prevented from confusing between the connection unit and the fuel supply unit. Further, it is possible to obtain advantages and effects similar to those of hybrid vehicle 100 according to the first embodiment.

In this case, the connector connected to the connection unit is a charging and power-feeding connector, and is a connector having both of a function of the charging connector and a function of the power-feeding connector, and is a connector capable of charging battery B with electric power supplied from the commercial power supply as well as supplying electric power from hybrid vehicle 100 to an external load.

The present invention is not limited to the above-described case where the neutral points of electric motor MG1 and electric motor MG2 are used to discharge electric power, with which battery B is charged, to the outside. Charge-specific device 400 may also be used to discharge electric power to the outside.

### (Third Embodiment)

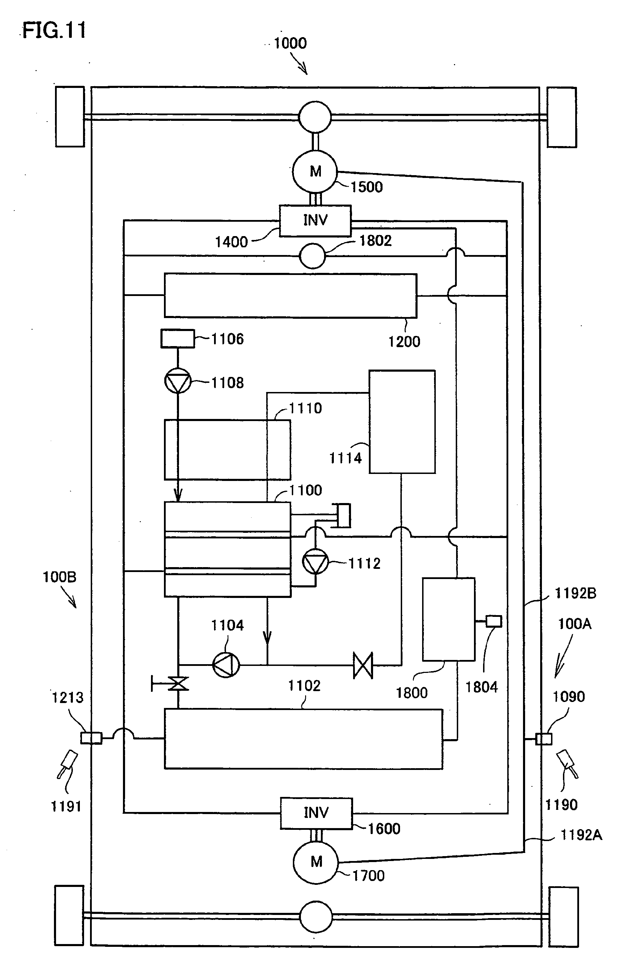

Fig. 11 is a schematic diagram that schematically shows a configuration of a fuel cell vehicle 1000 according to a third embodiment. As shown in Fig. 11, fuel cell vehicle 1000 includes a fuel cell 1100, a power storage device 1200 such as a capacitor, a running inverter 1400, an auxiliary inverter 1600, an auxiliary motor 1700, and an ECU (Electronic Control Unit) 1800. A control device for an electrical system according to the present embodiment is implemented by, for example, a program executed by ECU 1800.

Fuel cell 1100 generates electric power through a chemical reaction between hydrogen and oxygen in the air. The electric power generated at fuel cell 1100 is stored in power storage device 1200, or consumed by apparatuses mounted on fuel cell vehicle 1000. A well-known, common technique may be utilized for fuel cell 1100, and hence a further description will not be repeated here.

Power storage device 1200 is configured with, for example, a plurality of cells (electric double layer capacitors) connected in series, and may also be a secondary battery or the like. Running inverter 1400 converts direct-current electric power supplied from fuel cell 1100 and power storage device 1200 into alternating-current electric power, and drives running motor 1500. During regenerative braking, running inverter 1400 converts alternating-current electric power generated at running motor 1500 into direct-current electric power, and supplies the direct-current electric power to power storage device 1200.

Running motor 1500 is a three-phase alternating-current rotating electrical machine. A U-phase coil, a V-phase coil, and a W-phase coil are wound around a stator of running motor 1500. One end of the U-phase coil, one end portion of the V-phase coil, and one end of the W-phase coil are mutually connected at the neutral point. Further, the other end of the U-phase coil, the other end of the V-phase coil, and the other end of the W-phase coil are connected to running inverter 1400.

To the neutral point of running motor 1500, an interconnection 1192B of a power feed unit (second connection unit) 1090 is connected. Charge unit 1090 is capable of allowing, for example, connector 1190 connected to an alternating-current power supply such as a general household power supply to be connected thereto. Therefore, alternating-current electric power can be supplied to running motor 1500.

Auxiliary motor 1700 is also a three-phase alternating-current rotating electrical machine. A U-phase coil, a V-phase coil, and a W-phase coil are wound around a stator of auxiliary motor 1700. One end of the U-phase coil, one end portion of the V-phase coil, and one end of the W-phase coil are mutually connected at the neutral point. Further, the other end of the U-phase coil, the other end of the V-phase coil, and the other end of the W-phase coil are connected to auxiliary inverter 1600.

To the neutral point of auxiliary motor 1700 as well, an interconnection 1192A of charge unit 1090 is connected. To the neutral point of auxiliary motor 1700 as well, alternating-current electric power can be supplied from connector 1190 via charge unit 1090.

Charge unit 1090 as described above is provided at one lateral surface 100A of fuel cell vehicle 1000.

As such, the alternating-current electric power supplied to running motor 1500 and auxiliary motor 1700 is converted into direct-current electric power by running inverter 1400 and auxiliary inverter 1600, and supplied to power storage device 1200 to charge power storage device 1200.

Here, fuel cell vehicle 1000 runs by drive force from running motor 1500. During regenerative braking, running motor 1500 is driven by the wheel (not shown), and running motor 1500 is operated as a power generator. Running motor 1500 thereby operates as a regenerative brake that converts braking energy into electrical energy.

Auxiliary inverter 1600 converts direct-current electric power supplied from fuel cell 1100 and power storage device 1200 into alternating-current electric power, and drives auxiliary motor 1700. Auxiliary motor 1700 drives an auxiliary machine driven for operating fuel cell 1100. As to the auxiliary machine driven for operating fuel cell 1100 will be described below.

To ECU 1800, a voltmeter 1802 and a start switch 1804 are connected. The voltmeter senses a system voltage (a voltage of power storage device 1200) and transmits a signal indicating a result of the sensing to ECU 1800. Start switch 1804 is manipulated by the driver of fuel cell vehicle 1000. When start switch 1804 is turned on, ECU 1800 activates the system of the vehicle. If start switch 1804 is turned off, ECU 1800 shuts down the system of the vehicle.

ECU 1800 controls apparatuses mounted on fuel cell vehicle 1000 such that the vehicle is brought into a desired driven state, based on a driven state of the vehicle, an accelerator pedal position sensed by an accelerator pedal position sensor (not shown), a depressed amount of a brake pedal, a shift position, a voltage of power storage device 1200, a state of start switch 1804 being manipulated, a map and a program stored in a ROM (Read Only Memory), and the like.

Fuel cell vehicle 1000 includes a hydrogen tank 1102, a hydrogen pump 1104, an air filter 1106, an air pump 1108, a humidifier 1110, a water pump 1112, and a diluter 1114.

Hydrogen tank 1102 stores hydrogen. A hydrogen storing alloy may be used instead of hydrogen tank 1102.

A connection unit 1213, which supplies hydrogen supplied from a hydrogen supply connection unit 1191 to hydrogen tank 1102, is connected to hydrogen tank 1102.

Connection unit 1213 is provided at the other lateral surface 100B out of lateral surfaces 100A, 100B arranged in the width direction of fuel cell vehicle 100, the other lateral surface 100B being arranged to face lateral surface 100A at which charge unit 1090 is provided, in the width direction of vehicle 1000.

As such, charge unit 1090 and connection unit 1213 are provided at different lateral surfaces 100A, 100B, respectively, which are arranged in the width direction of fuel cell vehicle 1000. Therefore, the worker that replenishes hydrogen tank 1102 with hydrogen and charges power storage device 1200 can be prevented from confusing between connection unit 1213 and charge unit 1090.

Here, as to the positional relation between connection unit 1213 and charge unit 1090, it is possible to incorporate the positional relations between charge unit 90 and fuel supply unit 213 as shown in the first embodiment described above.

If electric power is to be generated by fuel cell 1100, hydrogen stored in hydrogen tank 1102 is delivered to an anode side of fuel cell 1100 by hydrogen pump 1104. If hydrogen pump 1104 is driven in the case where power generation by fuel cell 1100 is to be stopped, stop processing for ejecting remaining hydrogen from the anode side of fuel cell 1100 is performed. Hydrogen pump 1104 is a pump driven by auxiliary motor 1700.

Air is delivered to a cathode side of fuel cell 1100 from air pump 1108. If air pump 1108 is driven in the case where electric power is to be generated by fuel cell 1100, air is drawn through air filter 1106, and the drawn air is humidified by humidifier 1110, and then delivered to the cathode side of fuel cell 1100. If air pump 1108 is driven in the case where power generation by fuel cell 1100 is to be stopped, air drawn through air filter 1106 is delivered to the cathode side of fuel cell 1100 without being humidified, so that stop processing for drying fuel cell 1100 is performed. Air pump 1108 is a pump driven by auxiliary motor 1700.

Water pump 1112 discharges cooling water that cools fuel cell 1100. The cooling water discharged by water pump 1112 circulates in fuel cell 1100. Water pump 1112 is a pump driven by auxiliary motor 1700.

The hydrogen that has passed through the anode side of fuel cell 1100, and the air that has passed through the cathode side of fuel cell 1100, are guided to diluter 1114. Diluter 1114 reduces the concentration of the hydrogen, and the diluted hydrogen is ejected to the outside of the vehicle.

Although only one auxiliary motor 1700 is described, auxiliary motors 1700 are provided to correspond to hydrogen pump 1104, air pump 1108, and water pump 1112, respectively. In the present embodiment, direct-current electric power supplied from power storage device 1200 is converted into alternating-current electric power to drive auxiliary motor 1700. However, the present invention may also be configured such that auxiliary motor 1700 is driven by direct-current electric power without the intervention of auxiliary inverter 1600.

In the second embodiment, hydrogen to be used in fuel cell 1100 is supplied from connection unit 1213. However, the present invention is not limited thereto.

For example, if there is adopted a scheme in which a reformer that extracts hydrogen from fuel, such as methanol, containing hydrogen elements, methanol is supplied to connection unit 1213. Connection unit 1213 is connected to a methanol tank, not shown, provided in addition to hydrogen tank 1102, and methanol is reserved in the methanol tank.

The methanol reserved in the methanol tank and water are supplied to the reformer to generate hydrogen, and the generated hydrogen is reserved in hydrogen tank 1102. Alternatively, the generated hydrogen may directly be supplied to the fuel cell.

Further, in the direct methanol scheme in which methanol is directly supplied to the fuel cell, methanol is also supplied to the connection unit.

In the direct methanol scheme, water and methanol are supplied to the anode of fuel cell 1100. A catalyst such as platinum is used to decompose the water and the methanol into hydrogen ions, electrons, and carbon dioxide. The hydrogen ions pass through an electrolytic film and move to the cathode side, react with oxygen in the air, and turn into water. The electrons pass through terminals, and are supplied as electric power.

In fuel cell vehicle 1000 that adopts the direct methanol scheme, methanol supplied from connection unit 1213 is reserved in the methanol tank to which connection unit 1213 is connected. The methanol reserved in the methanol tank is then supplied to fuel cell 1100.

Further, in fuel cell vehicle 1000 mounted with an ethanol-reforming device, ethanol is supplied to connection unit 1213. In fuel cell vehicle 1000 mounted with the ethanol-reforming device, ethanol and water are supplied to the ethanol-reforming device, so that hydrogen and carbon dioxide are generated. The generated hydrogen is then used and supplied to the fuel cell, so that electric power can be obtained.

In fuel cell vehicle 1000 mounted with the ethanol-reforming device, ethanol is supplied from connection unit 1213, and the supplied ethanol is reserved in the ethanol tank. The ethanol reserved in the ethanol tank is then supplied to the ethanol-reforming device.

As such, the present invention can be applied to various types of fuel cell vehicles 1000 as described above. The worker that supplies electric power to the battery and supplies various types of fuel to corresponding fuel tanks can confuse between charge unit 1090 to which connector 1190 supplying electric power is connected, and connection unit 1213 to which the fuel supply unit supplying various types of fuel is connected.

In the third embodiment, there has been described the fuel cell vehicle in which power storage device 1200 can be charged and fuel other than electric power can be supplied. However, the present invention is not limited thereto.

For example, the present invention may also be applied to a fuel cell vehicle capable of converting direct-current electric power stored in power storage device 1200 into alternating-current electric power and supplying the alternating-current electric power to an external load, and capable of being supplied with fuel other than electric power and supplying the fuel to the fuel cell to generate drive force.

### (Fourth Embodiment)

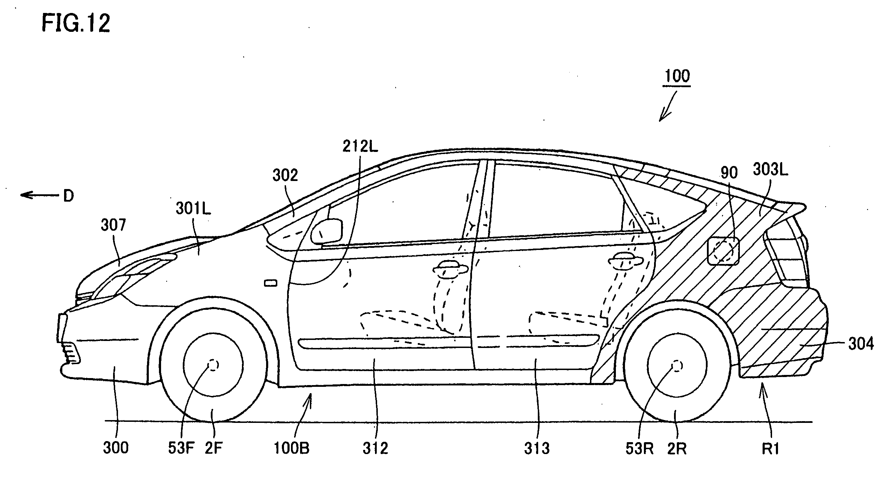

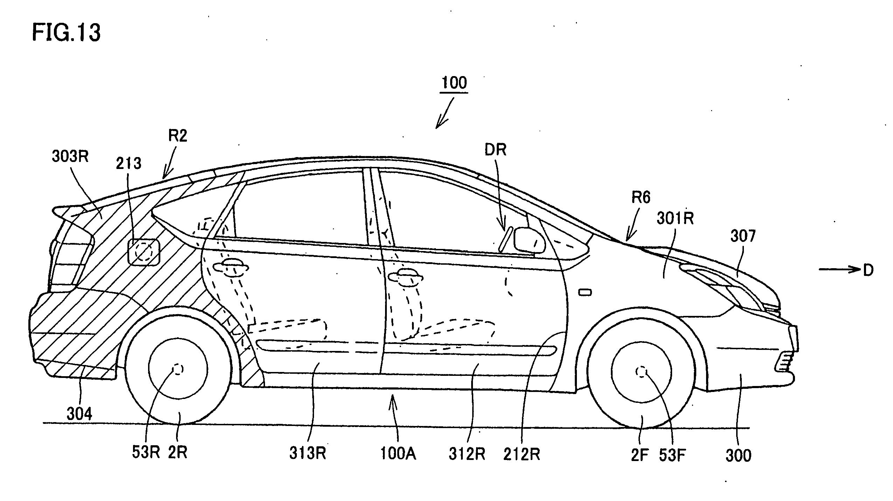

With reference to Fig. 12 and Fig. 13, hybrid vehicle 100 according to a fourth embodiment of the present invention will be described. In Fig. 12 and Fig. 13, the configurations identical to or corresponding to the configurations shown in Fig. 1 to Fig. 11 are provided with the same reference characters, and the description thereof may not be repeated.

Fig. 12 is a side view of hybrid vehicle 100 on lateral surface 100B side, and Fig. 13 is a side view of hybrid vehicle 100 on lateral surface 100A side. As shown in Fig. 12 and Fig. 13, charge unit 90 is provided at rear fender 303L on lateral surface 100B side of the hybrid vehicle, and fuel supply unit 213 is provided at rear fender 303R on lateral surface 100A side.

Driver's seat DR is shifted to lateral surface 100A side with respect to centerline 0, and hence the driver can immediately perform an oiling operation. In the hybrid vehicle according to the fourth embodiment as well, charge unit 90 and fuel supply unit 213 are provided at the lateral surfaces opposed to each other, as in hybrid vehicle 100 according to the first embodiment, and advantages and effects similar to those of the hybrid vehicle according to the first embodiment can be obtained.

### (Fifth Embodiment)

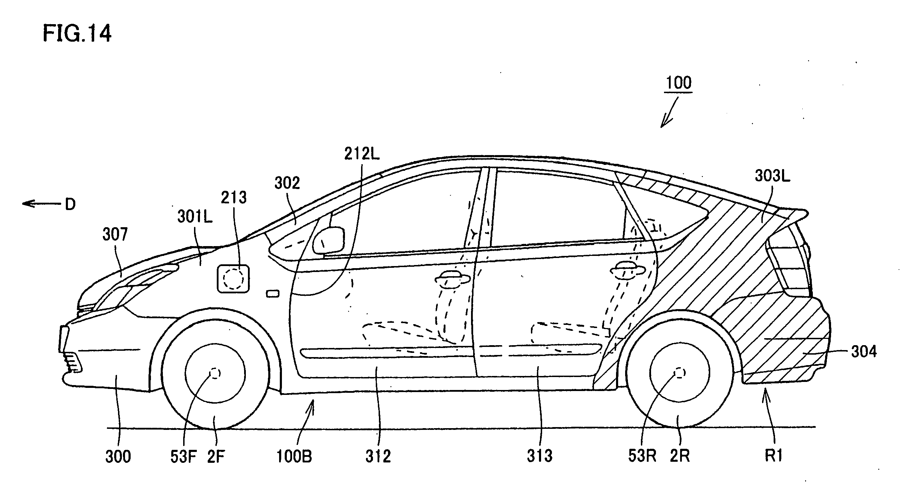

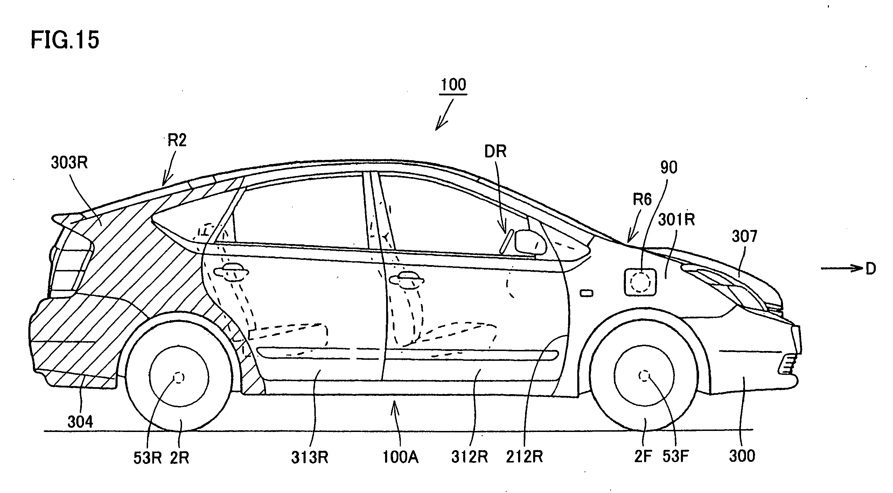

With reference to Fig. 14 and Fig. 15, hybrid vehicle 100 according to a fifth embodiment of the present invention will be described. In Fig. 14 and Fig. 15, the configurations identical to or corresponding to the configurations shown in Fig. 1 to Fig. 13 are provided with the same reference characters, and the description thereof may not be repeated. Fig. 14 is a side view of hybrid vehicle 100 on lateral surface 100B side, and Fig. 15 is a side view of hybrid vehicle 100 on lateral surface 100A side.

As shown in Fig. 14 and Fig. 15, fuel supply unit 213 is provided at front fender 301 L on lateral surface 100B side, and charge unit 90 is provided at front fender 301 R on lateral surface 100A side.

As such, both of charge unit 90 and fuel supply unit 213 are disposed in a forward section of the vehicle, so that both of charge unit 90 and fuel supply unit 213 are close to driver's seat DR, and hence when the driver is to perform a charging operation or a power feed operation, the driver can immediately start the operation. Further, charge unit 90 and fuel supply unit 213 are located in a forward section of the vehicle, so that the vehicle can easily be aligned with an oiling device provided with fuel supply connector 191, and furthermore, the vehicle can easily be aligned with a power feeding device provided with connector 190.

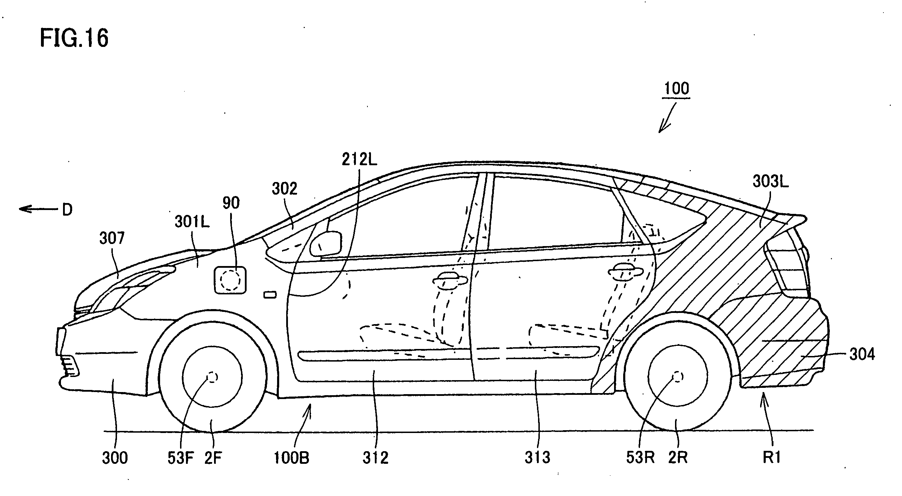

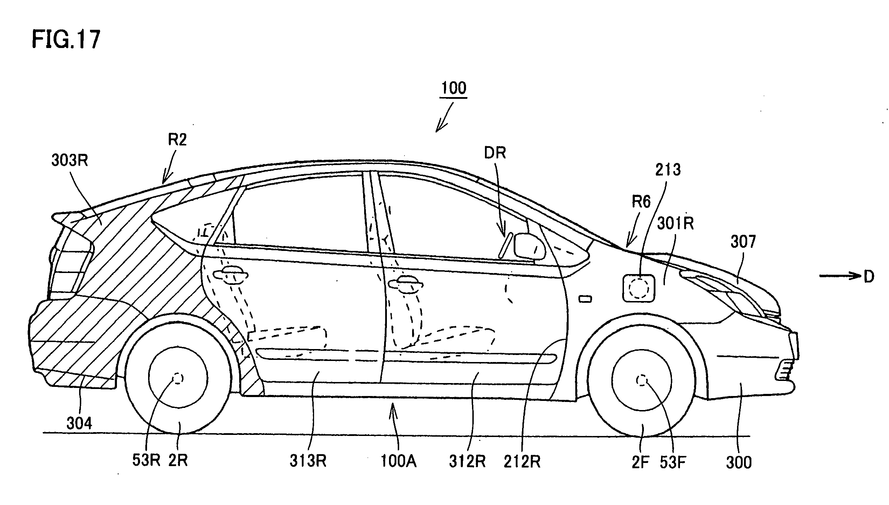

The relation as to how charge unit 90 and fuel supply unit 213 are disposed on the right and the left is not limited to the example shown in Fig. 14 and Fig. 15, as long as both of charge unit 90 and fuel supply unit 213 are located forward with respect to openings 212L, 212R. Each of Fig. 16 and Fig. 17 is a side view that shows a modification of the relation as to how charge unit 90 and fuel supply unit 213 are disposed, as shown in Fig. 14 and Fig. 15.

As shown in Fig. 16 and Fig. 17, charge unit 90 may be disposed at front fender 301 L at lateral surface 100B, and fuel supply unit 213 may be disposed at front fender 301 R at lateral surface 100A.

### (Sixth Embodiment)

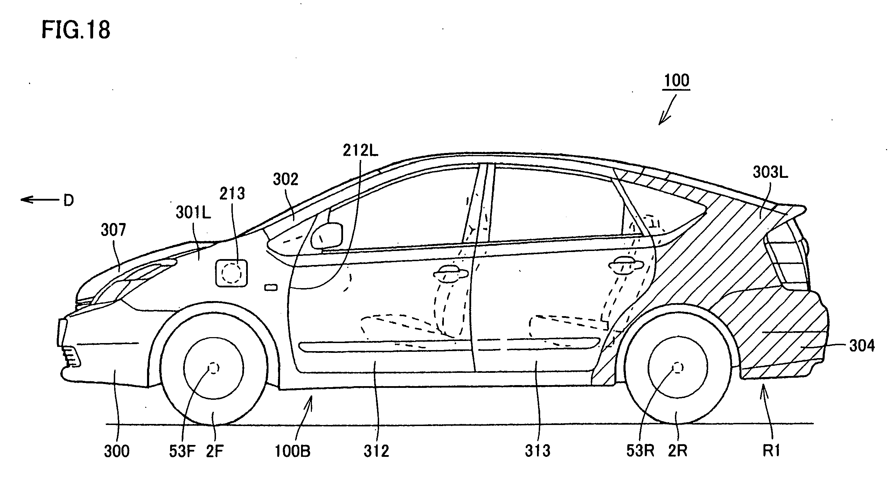

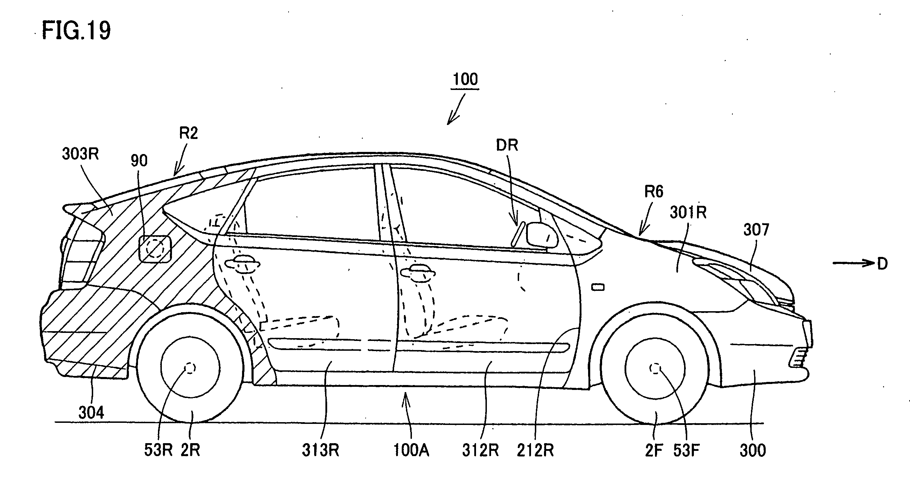

With reference to Fig. 18 and Fig. 19, hybrid vehicle 100 according to a fifth embodiment of the present invention will be described. In Fig. 18 and Fig. 19, the configurations identical to or corresponding to the configurations shown in Fig. 1 to Fig. 17 are provided with the same reference characters, and the description thereof may not be repeated. Fig. 18 is a side view of hybrid vehicle 100 on lateral surface 100B side, and Fig. 19 is a side view of hybrid vehicle 100 on lateral surface 100A side.

As shown in Fig. 18 and Fig. 19, fuel supply unit 213 is provided at front fender 301L at lateral surface 100B, and charge unit 90 is provided at rear fender 303R at lateral surface 100A.

As such, fuel supply unit 213 and charge unit 90 are provided at lateral surfaces 100A, 100B opposed to each other, respectively, and furthermore, one of fuel supply unit 213 and charge unit 90 is provided in the forward section of the vehicle with respect to openings 212L, 212R, and the other of unit 213 and charge unit 90 is provided in the rearward section of the vehicle. In other words, fuel supply unit 213 and charge unit 90 are provided to be point-symmetric to each other with respect to the center of passenger accommodation cabin CR.

The distance between charge unit 90 and fuel supply unit 213 is thereby increased, so that in the case of crash, for example, charge unit 90 and fuel supply unit 213 can be prevented from being damaged simultaneously. Further, by ensuring a distance between charge unit 90 and fuel supply unit 213, the worker that performs a charge operation and an oiling operation can be prevented from simultaneously performing the oiling operation and the charge operation.

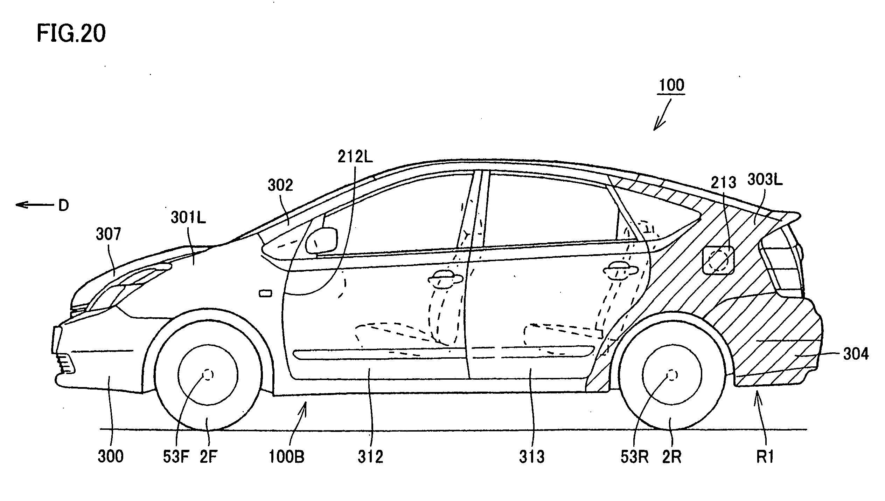

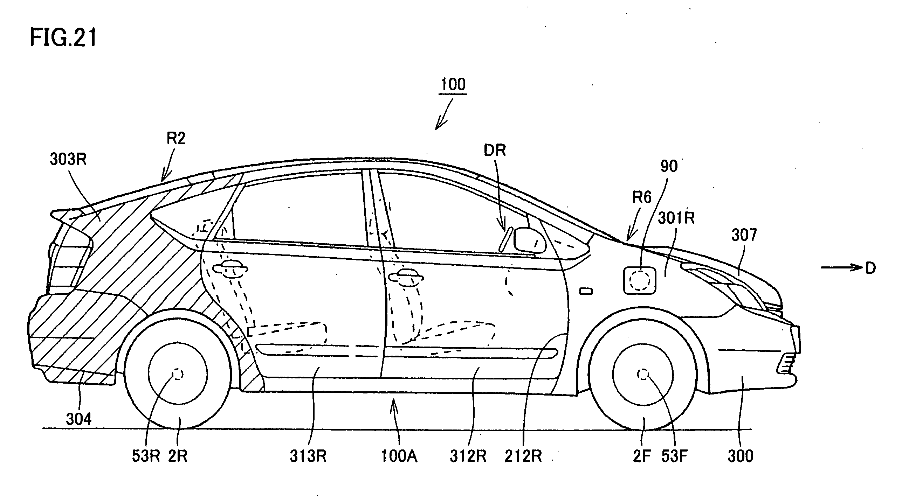

Regarding the relation as to how charge unit 90 and fuel supply unit 213 are disposed, it is not limited to the example shown in Figs. 18 and 19, and the relation as shown in Fig. 20 and Fig. 21 may be adopted.

Each of Fig. 20 and Fig. 21 is a side view of hybrid vehicle 100. In the example shown in Fig. 20 and Fig. 21, fuel supply unit 213 is disposed at rear fender 303L at lateral surface 100B, and furthermore, charge unit 90 is disposed at front fender 301 R at lateral surface 100A. In the example shown in Figs. 20 and 21 as well, in the case of crash, for example, charge unit 90 and fuel supply unit 213 can be prevented from being damaged simultaneously.

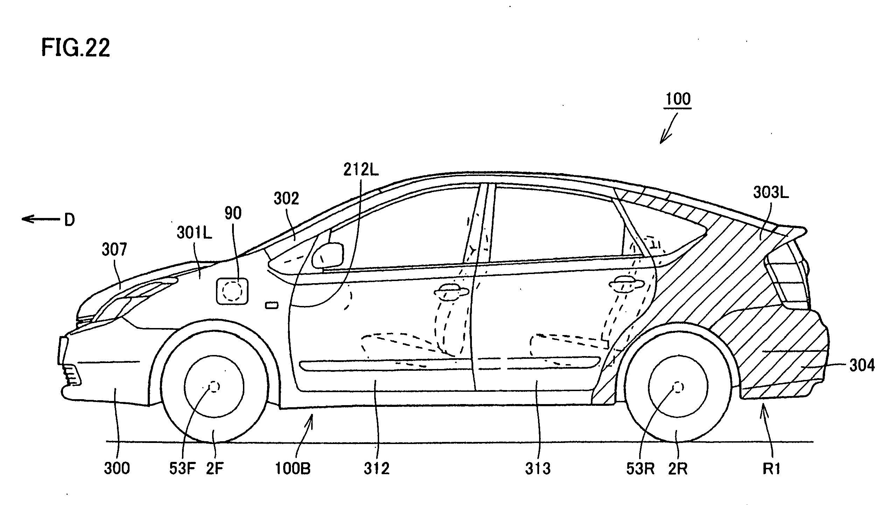

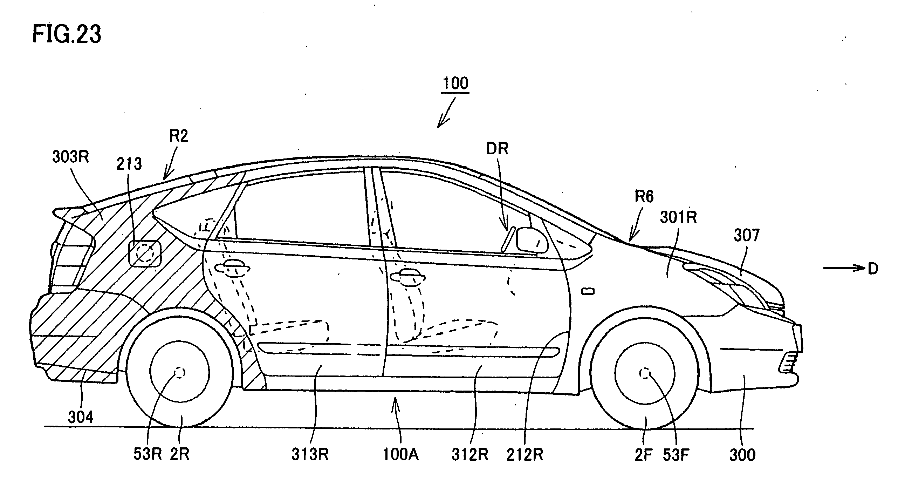

Further, each of Fig. 22 and Fig. 23 is a side view of the hybrid vehicle, and shows another modification of the relation as to how charge unit 90 and fuel supply unit 213 are disposed. In the example shown in Fig. 22 and Fig. 23, charge unit 90 is provided at front fender 301 L on lateral surface 100B side, and fuel supply unit 213 is provided at rear fender 303R at lateral surface 100A.

In the example shown in Fig. 22 and Fig. 23 as well, fuel supply unit 213 and charge unit 90 are disposed to be point-symmetric to each other with respect to the center of passenger accommodation cabin CR. Therefore, in this modification as well, fuel supply unit 213 and charge unit 90 can be prevented from being damaged simultaneously in the case of crash.

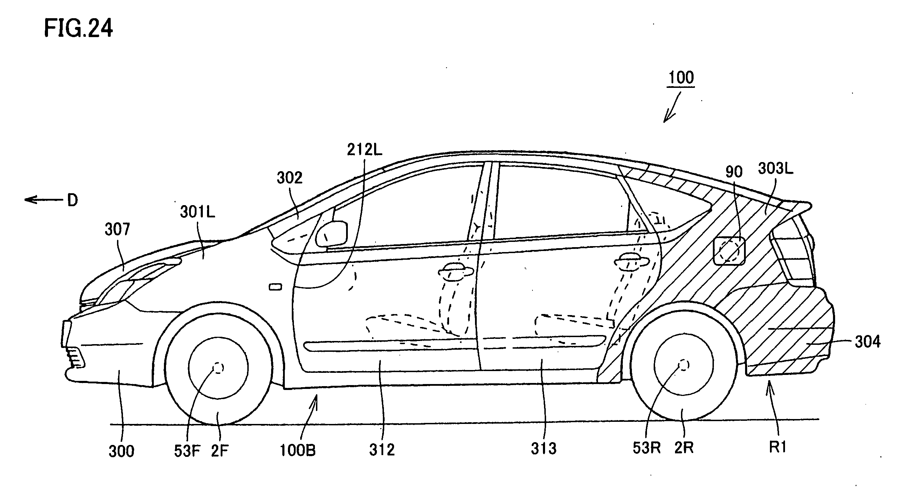

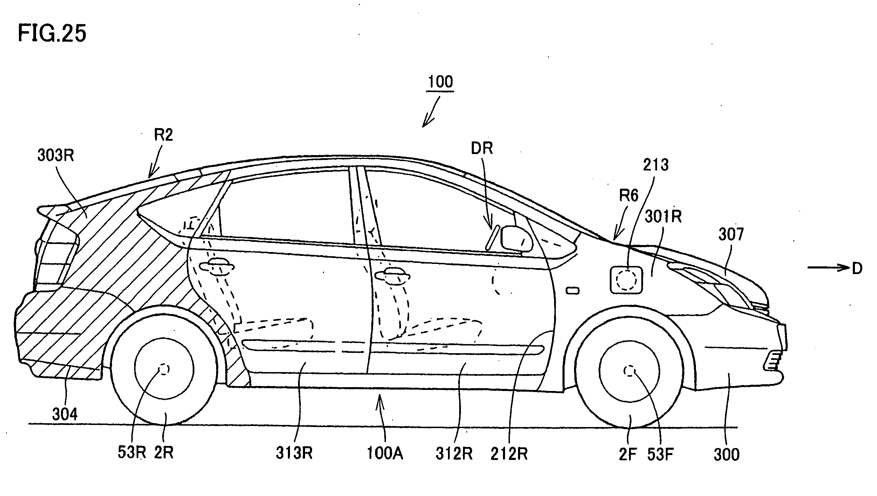

Each of Fig. 24 and Fig. 25 is a side view of the hybrid vehicle, and shows still another modification. In the example shown in Figs. 24 and 25, charge unit 90 is provided at rear fender 303L on lateral surface 100B side, and fuel supply unit 213 is provided at front fender 301R on lateral surface 100A side. As such, in the example shown in Figs. 24 and 25 as well, charge unit 90 and fuel supply unit 213 are disposed to be point-symmetric to each other with respect to the center of passenger accommodation cabin CR. Therefore, charge unit 90 and fuel supply unit 213 can be prevented from being damaged simultaneously in the case of crash.

As such, the embodiments of the present invention have been described. It should be understood that the embodiments disclosed herein are illustrative and not limitative in all aspects. The scope of the present invention is shown not by the description above but by the scope of the claims, and is intended to include all modifications within the scope of the claims.

### Industrial Applicability

The present invention relates to a vehicle, and is particularly suitable for a vehicle to which different types of energy sources are supplied.

## Claims

1. A vehicle comprising:
a first drive unit (4) driven by a first energy source;
a first reservoir unit (201) reserving said first energy source;
one first connection unit (213) allowing a first energy source supply unit (191) to be connected thereto, and guiding said first energy source supplied from said first energy source supply unit (191) to said first reservoir unit (201);
a second drive unit (MG1, MG2) driven by a second energy source different from said first energy source;
a second reservoir unit (B) reserving said second energy source; and
one second connection unit (90) allowing a second energy source supply unit (190) to be connected thereto, and guiding said second energy source supplied from said second energy source supply unit (190) to said second reservoir unit (B), wherein
said one first connection unit (213) is provided at one lateral surface of said vehicle and said one second connection unit (90) is provided at the other lateral surface of said vehicle, said one lateral surface and said other lateral surface being arranged in a width direction of said vehicle and wherein no further connection units (90, 213) are provided.

2. A vehicle according to claim 1, wherein
said one second connection unit (90) allows said second energy source stored in said second reservoir unit (B) to be supplied to an outside from said second energy source supply unit (190).

3. The vehicle according to claim 1 or 2, wherein
said first drive unit **(4)** is an internal combustion engine **(4)** driven by said first energy source identified as fuel, and generating drive power, and
said second drive unit **(MG1, MG2)** is an electric motor driven by said second energy source identified as electric power, and generating drive power for driving a wheel, or wherein
said first drive unit **(4)** is a power generation unit using said first energy source identified as fuel, and generating electric power, and
said second drive unit **(MG1, MG2)** is an electric motor **(MG1, MG2)** generating drive power for driving a wheel, by said second energy source identified as electric power, or wherein
said first drive unit (**4**) is a power generation unit using said first energy source identified as fuel, and generating electric power,
said second drive unit (**MG1**) is an electric motor (**MG1**) generating drive power for driving a wheel, by said second energy source identified as electric power, and
said power generation unit includes an internal combustion engine (**4**) driven by said first energy source identified as fuel, and a power-generating electric motor (**MG2**) driven by drive power obtained from said internal combustion engine (**4**).

4. The vehicle according to claim 1 or 2, wherein said first connection unit (**213**) and said second connection unit (**90**) are opposed in the width direction of said vehicle.

5. The vehicle according to claim 1 or 2, wherein
said first drive unit (**4**) is an internal combustion engine (**4**) driven by said first energy source identified as fuel, and generating drive power,
said second drive unit (**MG1**) is an electric motor (**MG1**) driven by said second energy source identified as electric power, and generating drive power for driving a wheel,
the vehicle further comprises a passenger accommodation cabin accommodating a passenger,
said electric motor (**MG1**) and said internal combustion engine (**4**) are provided forward in a traveling direction (**D**) with respect to said passenger accommodation cabin, and
said first reservoir unit (**201**), said second reservoir unit (**B**), said first connection unit (**213**), and said second connection unit (**90**) are provided rearward in the traveling direction (**D**) with respect to said electric motor (**MG1**) and said internal combustion engine (**4**).

6. The vehicle according to claim 1 or 2, further comprising
a passenger accommodation cabin accommodating a passenger, and
a loading-and-unloading opening (**212R, 212L**) in communication with said passenger accommodation cabin, wherein
said first connection unit (**213**) and said second connection unit (**90**) are located rearward in a traveling direction with respect to said loading-and-unloading opening.

7. The vehicle according to claim 1 or 2, further comprising
a passenger accommodation cabin accommodating a passenger,
a loading-and-unloading opening (**212R, 212L**) in communication with said passenger accommodation cabin, and
a wheel, wherein
said wheel includes a front wheel (**2F**) located forward in a traveling direction (**D**) with respect to said loading-and-unloading opening (**212R**, **212**L), and a rear wheel (**2R**) located rearward in the traveling direction with respect to said loading-and-unloading opening (**212R**, **212L**), and
said second connection unit (**90**) is located upward with respect to said rear wheel (**2R**).

8. The vehicle according to claim 1, wherein
said second energy source is electric power,
said second reservoir unit (**B**) is a power storage device (**B**) storing said second energy source identified as direct-current electric power,
the vehicle further comprises a converter (**400**)
connecting said second connection unit (**90**) and said power storage device (**B**),
converting said second energy source which is supplied from said second energy source supply unit and identified as alternating-current electric power into said second energy source identified as direct-current electric power, and
supplying the direct-current electric power to said power storage device (**B**), and
said converter (**400**) is disposed on a periphery of said power storage device (**B**), **or** wherein
said second energy source is electric power,
said second reservoir unit (**B**) is a power storage device (**B**) storing said second energy source identified as direct-current electric power,
said second drive unit (**MG1**, **MG2**) is an electric motor (**MG1**, **MG2**) driven by said second energy source identified as alternating-current electric power,
said electric motor (**MG1**, **MG2**) includes a first electric motor (**MG1**) having a first multiphase winding wire (**11**) and a first neutral point (**M1**) of the first multiphase winding wire (**11**), and a second electric motor (**MG2**) having a second multiphase winding wire (**12**) and a second neutral point (**M2**) of the second multiphase winding wire (**12**),
said second connection unit (**90**) includes a first interconnection (**92B**) connected to said first neutral point (**M1**), and a second interconnection (**92A**) connected to said second neutral point (**M2**),
the vehicle further comprises
a first inverter (**30**) converting said second energy source which is supplied from said power storage device (**B**) and identified as direct-current electric power into said second energy source identified as alternating-current electric power, and supplying the alternating-current electric power to said first electric motor (**MG1**),
a second inverter (**40**) converting said second energy source which is supplied from said power storage device (**B**) and identified as direct-current electric power into said second energy source identified as alternating-current electric power, and supplying the alternating-current electric power to said second electric motor (**MG2**), and
an inverter control unit (**70**) controlling said first and second inverters (**30**, **40**), and
the inverter control unit (**70**) controls said first and second inverters (**30**, **40**) such that alternating-current electric power provided from said second connection unit (**90**) to said first and second neutral points (**M1**, **M2**) is converted into direct-current electric power and supplied to said power storage device (**B**).

9. The vehicle according to claim 2, wherein
said second energy source is electric power,
said second reservoir unit (**B**) is a power storage device (**B**) storing said second energy source identified as direct-current electric power,
the vehicle further comprises a converter (**400**)
connecting said second connection unit (**90**) and said power storage device (**B**),
converting said second energy source which is stored in said power storage device (**B**) and identified as direct-current electric power into the second energy source identified as alternating-current electric power, and
supplying the alternating-current electric power to said second energy source supply unit (**190**), and
said converter (**400**) is disposed on a periphery of said power storage device (**B**), or wherein
said second energy source is electric power,
said second reservoir unit (**B**) is a power storage device (**B**) storing said second energy source identified as direct-current electric power
said second drive unit (**MG1**, **MG2**) is an electric motor (**MG1**, **MG2**) driven by said second energy source identified as alternating-current electric power,
said electric motor (**MG1**, **MG2**) includes a first electric motor (**MG1**) having a first multiphase winding wire (**11**) and a first neutral point (**M1**) of the first multiphase winding wire (**11**), and a second electric motor (**MG2**) having a second multiphase winding wire (**12**) and a second neutral point (**M2**) of the second multiphase winding wire (**12**),
said second connection unit (**90**) includes a first interconnection (**92B**) connected to said first neutral point (**M1**), and a second interconnection (**92A**) connected to said second neutral point (**M2**),
the vehicle further comprises
a first inverter (**30**) converting said second energy source which is supplied from said power storage device (**B**) and identified as direct-current electric power into said second energy source identified as alternating-current electric power, and supplying the alternating-current electric power to said first electric motor (**MG1**),
a second inverter (**40**) converting said second energy source which is supplied from said power storage device (**B**) and identified as direct-current electric power into said second energy source identified as alternating-current electric power, and supplying the alternating-current electric power to said first electric motor (**MG1**), and
an inverter control unit (**70**) controlling said first and second inverters (**30**, **40**), and
said inverter control unit (**70**) controls said first inverter and said second inverter (**30**, **40**) such that converting direct-current electric power which is supplied from said power storage device (**B**) to said first inverter and said second inverter (**30**, **40**) into alternating-current electric power, and supplying the alternating-current electric power to an external load from said second connection unit (**90**).

10. The vehicle according to claim 1 or 2, wherein said first connection unit and said second connection unit are disposed to be line-symmetric to each other with respect to a centerline of said vehicle, the centerline extending in a front-rear direction of the vehicle.

11. The vehicle according to claim 1 or 2, further comprising
a passenger accommodation cabin accommodating a passenger, and
a loading-and-unloading opening (**212R**, **212L**) in communication with said passenger accommodation cabin, wherein
said first connection unit and said second connection unit are disposed in a forward section of the vehicle with respect to said loading-and-unloading opening.

12. The vehicle according to claim 1 or 2, further comprising a passenger accommodation cabin (**CR**) accommodating a passenger, wherein
one of said first connection unit and said second connection unit is located forward with respect to said passenger accommodation cabin (**CR**), and the other of said first connection unit and said second connection unit is located rearward with respect to said passenger accommodation cabin (**CR**).

13. The vehicle according to claim 1 or 2, wherein
said first drive unit (**4**) is a power generation unit using said first energy source identified as fuel, and generating electric power,
said power generation unit includes an internal combustion engine (**4**) driven by said first energy source identified as fuel, and a power-generating electric motor (**MG2**) driven by drive power obtained from said internal combustion engine (**4**),
said second drive unit (**MG1**) is an electric motor (**MG1**) generating drive power for driving a wheel, by said second energy source identified as electric power,
said first connection unit includes a reception unit (**215**) allowing said first energy source supply unit (**191**) to be connected thereto, and a first lid unit (**213A**) allowing an opening of the reception unit (**215**) to be opened and closed, and
said second connection unit includes a connector (**91**) capable of allowing the second energy source supply unit to be connected thereto, and a second lid unit (**90A**) allowing said connector (**91**) to be exposed to an outside and to be accommodated in the vehicle, or wherein
said first drive unit (**4**) is a fuel cell (**1100**) using said second energy source containing hydrogen elements, and generating electric power,
said second drive unit (**MG1**) is electric motor (**MG1**) generating drive power for driving a wheel, by said second energy source identified as electric power,
said first connection unit includes a reception unit (**215**) allowing said first energy source supply unit (**191**) to be connected thereto, and a first lid unit (**213A**) allowing an opening of the reception unit (**215**) to be opened and closed, and
said second connection unit includes a connector (**91**) capable of allowing the second energy source supply unit to be connected thereto, and a second lid unit (**90A**) allowing said connector (**91**) to be exposed to an outside and to be accommodated in the vehicle.

14. A vehicle comprising:
a power generation unit generating electric power by a first energy source;
a first reservoir unit (201) reserving said first energy source;
one first connection unit (213) allowing a first energy source supply unit (191) to be connected thereto, and guiding said first energy source supplied from said first energy source supply unit (191) to said first reservoir unit (201);
a drive unit (MG1, MG2) driven by a second energy source different from said first energy source;
a second reservoir unit (B) reserving said second energy source; and
one second connection unit (90) allowing a second energy source supply unit (190) to be connected thereto, and guiding said second energy source supplied from said second energy source supply unit (190) to said second reservoir unit (B), wherein
said one first connection unit (213) is provided at one lateral surface of said vehicle, and said one second connection unit (90) is provided at the other lateral surface of said vehicle, said one lateral surface and said other lateral surface being arranged in a width direction of said vehicle, and wherein no further connection units (90, 213) are provided.

15. A vehicle according to claim 14, wherein
said one second connection unit (90) allows said second energy source stored in said second reservoir unit (B) to be supplied to an outside from said second energy source supply unit (190).

## Patentansprüche

1. Fahrzeug mit:
einer ersten Antriebseinheit (4), die durch eine erste Energiequelle angetrieben ist;
einer ersten Halteeinheit (201), die die erste Energiequelle hält;
einer ersten Verbindungseinheit (213), die einer ersten Energiequellenzufuhreinheit (191) gestattet, damit verbunden zu sein, und die von der ersten Energiequellenzufuhreinheit (191) zugeführte erste Energiequelle zu der ersten Halteeinheit (201) zu führen;
einer zweiten Antriebseinheit (MG1, MG2), die durch eine von der ersten Energiequelle unterschiedliche zweite Energiequelle angetrieben ist;
einer zweiten Halteeinheit (B), die die zweite Energiequelle zurückhält; und
einer zweiten Verbindungseinheit (90), die einer zweiten Energiequellenzufuhreinheit (190) ermöglicht, damit verbunden zu sein, und die von der zweiten Energiequellenzufuhreinheit (190) zugeführte zweite Energiequelle zu der zweiten Halteeinheit (B) führt, wobei
die erste Verbindungseinheit (213) an einer seitlichen Fläche des Fahrzeugs bereitgestellt ist und die eine zweite Verbindungseinheit (90) an der anderen seitlichen Fläche des Fahrzeugs bereitgestellt ist, wobei die eine seitliche Fläche und die andere seitliche Fläche in einer Richtung des Fahrzeugs der Breite nach angeordnet sind und wobei keine weiteren Verbindungseinheiten (90, 213) bereitgestellt sind.

2. Fahrzeug nach Anspruch 1, wobei
die eine zweite Verbindungseinheit (90) der zweiten Energiequelle, die in der zweiten Halteeinheit (B) gespeichert ist, ermöglicht, zu einem Äußeren von der zweiten Energiequellenzufuhreinheit (190) zugeführt zu werden.

3. Fahrzeug nach Anspruch 1 oder 2, wobei
die erste Antriebseinheit (4) eine Brennkraftmaschine (4) ist, die durch die erste Energiequelle angetrieben ist, die als Kraftstoff identifiziert ist, und eine Antriebsleistung erzeugt, und
die zweite Antriebseinheit (MG1, MG2) ein Elektromotor ist, der durch die zweite Energiequelle angetrieben ist, die als elektrischer Strom identifiziert ist, und eine Antriebsleistung zum Antreiben eines Rads erzeugt, oder wobei
die erste Antriebseinheit (4) eine Leistungserzeugungseinheit ist, die die erste Energiequelle, die als Kraftstoff identifiziert ist, verwendet, und einen elektrischen Strom erzeugt, und
die zweite Antriebseinheit (MG1, MG2) ein Elektromotor (MG1, MG2) ist, der eine Antriebsleistung zum Antreiben eines Rads durch die zweite Energiequelle erzeugt, die als elektrischer Strom identifiziert ist, oder wobei
die erste Antriebseinheit (4) eine Stromerzeugungseinheit ist, die die erste Energiequelle verwendet, die als Kraftstoff identifiziert ist, und einen elektrischen Strom erzeugt,
die zweite Antriebseinheit (MG1) ein Elektromotor (MG1) ist, der eine Antriebsleistung zum Antreiben eines Rads durch die zweite Energiequelle erzeugt, die als elektrischer Strom identifiziert ist, und
die Stromerzeugungseinheit eine Brennkraftmaschine (4) hat, die durch die erste Energiequelle angetrieben ist, die als Kraftstoff identifiziert ist, und einen Strom erzeugenden Elektromotor (MG2), der durch Antriebsleistung angetrieben ist, die von der Brennkraftmaschine (4) erhalten ist.

4. Fahrzeug nach Anspruch 1 oder 2, wobei die erste Verbindungseinheit (213) und die zweite Verbindungseinheit (90) in der Richtung des Fahrzeugs der Breite nach einander gegenüber liegen.

5. Fahrzeug nach Anspruch 1 oder 2, wobei
die erste Antriebseinheit (4) eine Brennkraftmaschine (4) ist, die durch die erste Energiequelle angetrieben ist, die als Kraftstoff identifiziert ist, und eine Antriebsleistung erzeugt,
die zweite Antriebseinheit (MG1) ein Elektromotor (MG1) ist, der durch die zweite Energiequelle angetrieben ist, die als elektrischer Strom identifiziert ist, und eine Antriebsleistung zum Antreiben eines Rads erzeugt,
das Fahrzeug außerdem eine Insassenaufnahmekabine umfasst, die einen Insassen aufnimmt,
der Elektromotor (MG1) und die Brennkraftmaschine (4) in einer Fahrrichtung (D) mit Bezug auf die Insassenaufnahmekabine vorne bereitgestellt sind, und
die erste Halteeinheit (201), die zweite Halteeinheit (B), die erste Verbindungseinheit (213) und die zweite Verbindungseinheit (90) in der Fahrrichtung (D) mit Bezug auf den Elektromotor (MG1) und der Brennkraftmaschine (4) hinten bereitgestellt sind.

6. Fahrzeug nach Anspruch 1 oder 2, außerdem mit einer Insassenaufnahmekabine, die einen Insassen aufnimmt, und
einer Lade- und Entladeöffnung (212R, 212L) in Verbindung mit der Insassenaufnahmekabine, wobei
die erste Verbindungseinheit (213) und die zweite Verbindungseinheit (90) in einer Fahrtrichtung mit Bezug auf die Lade- und Entladeöffnung hinten angeordnet sind.

7. Fahrzeug nach Anspruch 1 oder 2, außerdem mit
einer Insassenaufnahmekabine, die einen Insassen aufnimmt,
einer Lade- und Entladeöffnung (212R, 212L) in Verbindung mit der Insassenaufnahmekabine, und
einem Rad, wobei
das Rad ein Vorderrad (2F) hat, das in einer Fahrtrichtung (D) mit Bezug auf die Lade- und Entladeöffnung (212R, 212L) vorne angeordnet ist, und ein Hinterrad (2R), das in der Fahrtrichtung mit Bezug auf die Lade- und Entladeöffnung (212R, 212L) hinten angeordnet ist, und
die zweite Verbindungseinheit (90) mit Bezug auf das Hinterrad (2R) oberhalb angeordnet ist.

8. Fahrzeug nach Anspruch 1, wobei
die zweite Energiequelle elektrischer Strom ist,
die zweite Halteeinheit (B) ein Stromspeichergerät (B) ist, das die zweite Energiequelle speichert, die als elektrischer Gleichstrom identifiziert ist,
das Fahrzeug außerdem einen Wandler (400) umfasst,
der die zweite Verbindungseinheit (90) und das Stromspeichergerät (B) verbindet,
die zweite Energiequelle, die von der zweiten Energiequellenzufuhreinheit zugeführt wird, und als elektrischer Wechselstrom identifiziert ist, in die zweite Energiequelle umwandelt, die als elektrischer Gleichstrom identifiziert ist, und
den elektrischen Gleichstrom zu dem Stromspeichergerät (B) zuführt, und
der Wandler (400) an einem Rand des Stromspeichergeräts (B) angeordnet ist, oder wobei
die zweite Energiequelle elektrischer Strom ist,
die zweite Halteeinheit (B) ein Stromspeichergerät (B) ist, das die zweite Energiequelle speichert, die als elektrischer Gleichstrom identifiziert ist,
die zweite Antriebseinheit (MG1, MG2) ein Elektromotor (MG1, MG2) ist, der durch die zweite Energiequelle angetrieben ist, die als elektrischer Wechselstrom identifiziert ist,
der Elektromotor (MG1, MG2) einen ersten Elektromotor (MG1) hat, der einen ersten Mehrphasenwicklungsdraht (11) und einen ersten Neutralpunkt (M1) des ersten Mehrphasenwicklungsdrahts (11) aufweist, und einen zweiten Elektromotor (MG2), der einen zweiten Mehrphasenwicklungsdraht (12) und einen zweiten Neutralpunkt (M2) des zweiten Mehrphasenwicklungsdrahts (12) aufweist,
die zweite Verbindungseinheit (90) eine erste Zwischenverbindung (92B) hat, die mit dem ersten Neutralpunkt (M1) verbunden ist, und eine zweite Zwischenverbindung (92A), die mit dem zweiten Neutralpunkt (M2) verbunden ist,
das Fahrzeug außerdem umfasst
einen ersten Wandler (30), der die zweite Energiequelle, die von dem Stromspeichergerät (B) zugeführt ist und als elektrischer Gleichstrom identifiziert ist, in die zweite Energiequelle umwandelt, die als elektrischer Wechselstrom identifiziert ist, und den elektrischen Wechselstrom zu dem ersten Elektromotor (MG1) zuführt,
einen zweiten Wandler (40), der die zweite Energiequelle, die von dem Stromspeichergerät (B) zugeführt ist und als elektrischer Gleichstrom identifiziert ist, in die zweite Energiequelle umwandelt, die als elektrischer Wechselstrom identifiziert ist, und den elektrischen Wechselstrom zu dem zweiten Elektromotor (MG2) zuführt, und
einer Wandlersteuereinheit (70), die die ersten und zweiten Wandler (30, 40) steuert, und
die Wandlersteuereinheit (70) die ersten und zweiten Wandler (30, 40) derart steuert, dass ein elektrischer Wechselstrom, der von der zweiten Verbindungseinheit (90) zu den ersten und zweiten Neutralpunkten (M1, M2) bereitgestellt wird, in elektrischen Gleichstrom umgewandelt und zu dem Stromspeichergerät (B) zugeführt wird.

9. Fahrzeug nach Anspruch 2, wobei
die zweite Energiequelle elektrischer Strom ist,
die zweite Halteeinheit (B) ein Stromspeichergerät (B) ist, das die zweite Energiequelle speichert, die als elektrischer Gleichstrom identifiziert ist,
das Fahrzeug außerdem einen Wandler (400) umfasst,
der die zweite Verbindungseinheit (90) und das Stromspeichergerät (B) verbindet,
die zweite Energiequelle, die in dem Stromspeichergerät (B) gespeichert ist und als elektrischer Gleichstrom identifiziert ist, in die zweite Energiequelle umwandelt, die als elektrischer Wechselstrom identifiziert ist, und
den elektrischen Wechselstrom zu der zweiten Energiequellenzufuhreinheit (190) zuführt, und
der Wandler (400) an einem Rand des Stromspeichergeräts (B) angeordnet ist, oder wobei
die zweite Energiequelle elektrischer Strom ist,
die zweite Halteeinheit (B) ein Stromspeichergerät (B) ist, das die zweite Energiequelle speichert, die als elektrischer Gleichstrom identifiziert ist, wobei die zweite Antriebseinheit (MG1, MG2) ein Elektromotor (MG1, MG2) ist, der durch die zweite Energiequelle angetrieben ist, die als elektrischer Wechselstrom identifiziert ist,
wobei der Elektromotor (MG1, MG2) einen ersten Elektromotor (MG1) hat, der einen ersten Mehrphasenwicklungsdraht (11) und einen ersten Neutralpunkt (M1) des ersten Mehrphasenwicklungsdrahts (11) aufweist, und einen zweiten Elektromotor (MG2), der einen zweiten Mehrphasenwicklungsdraht (12) und einen zweiten Neutralpunkt (M2) des zweiten Mehrphasenwicklungsdrahts (12) aufweist,
wobei die zweite Verbindungseinheit (90) eine erste Zwischenverbindung (92B) hat, die mit dem ersten Neutralpunkt (M1) verbunden ist, und eine zweite Zwischenverbindung (92A), die mit dem zweiten Neutralpunkt (M2) verbunden ist, wobei das Fahrzeug außerdem umfasst
einen ersten Wandler (30), der die zweite Energiequelle, die von dem Stromspeichergerät (B) zugeführt ist und als elektrischer Gleichstrom identifiziert ist, in die zweite Energiequelle umwandelt, die als elektrischer Wechselstrom identifiziert ist, und den elektrischen Wechselstrom zu dem ersten Elektromotor (MG1) zuführt,
einen zweiten Wandler (40) der die zweite Energiequelle, die von dem Stromspeichergerät (B) zugeführt ist und als elektrischer Gleichstrom identifiziert ist, in die zweite Energiequelle umwandelt, die als elektrischer Wechselstrom identifiziert ist, und den elektrischen Wechselstrom zu dem ersten Elektromotor (MG1) zuführt, und
einer Wandlersteuereinheit (70), die die ersten und zweiten Wandler (30, 40) steuert, und
die Wandlersteuereinheit (70) den ersten Wandler und den zweiten Wandler (30, 40) derart steuert, dass der elektrische Gleichstrom, der von dem Stromspeichergerät (B) zu dem ersten Wandler und dem zweiten Wandler (30, 40) zugeführt ist, in elektrischen Wechselstrom umgewandelt wird, und den elektrischen Wechselstrom von der zweiten Verbindungseinheit (90) zu einer externen Last zuführt.

10. Fahrzeug nach Anspruch 1 oder 2, wobei die erste Verbindungseinheit und die zweite Verbindungseinheit angeordnet sind, in Linie zueinander mit Bezug auf eine Mittellinie des Fahrzeug symmetrisch zu sein, wobei die Mittellinie sich in einer Richtung des Fahrzeug von vorne nach hinten erstreckt.

11. Fahrzeug nach Anspruch 1 oder 2, außerdem mit
einer Insassenaufnahmekabine, die einen Insassen aufnimmt, und einer Lade-/Entladeöffnung (212R, 212L) in Verbindung mit der Insassenaufnahmekabine, wobei
die erste Verbindungseinheit und die zweite Verbindungseinheit mit Bezug auf die Lade- und Entladeöffnung in einem vorderen Abschnitt des Fahrzeugs angeordnet sind.

12. Fahrzeug nach Anspruch 1 oder 2, außerdem mit einer Insassenaufnahmekabine (CR), die einen Insassen aufnimmt, wobei
eine aus erster Verbindungseinheit und zweiter Verbindungseinheit mit Bezug auf die Insassenaufnahmekabine (CR) vorwärts angeordnet ist, und die andere aus erster Verbindungseinheit und zweiter Verbindungseinheit mit Bezug auf die Insassenaufnahmekabine (CR) hinten angeordnet ist.

13. Fahrzeug nach Anspruch 1 oder 2, wobei
die erste Antriebseinheit (4) eine Stromerzeugungseinheit ist, die die erste Energiequelle verwendet, die als Kraftstoff identifiziert ist und elektrischen Strom erzeugt,
die Stromerzeugungseinheit eine Brennkraftmaschine (4) hat, die durch die erste Energiequelle angetrieben ist, die als Kraftstoff identifiziert ist, und einen Strom erzeugenden Elektromotor (MG2), der durch die Antriebsleistung angetrieben ist, die von der Brennkraftmaschine (4) erhalten wird,
die zweite Antriebseinheit (MG1) ein Elektromotor (MG1) ist, der eine Antriebsleistung zum Antreiben eines Rads durch die zweite Energiequelle erzeugt, die als elektrischer Strom identifiziert ist,
die erste Verbindungseinheit eine Empfangseinheit (215) hat, die ermöglicht, dass die erste Energiequellenzufuhreinheit (191) damit verbunden wird, und eine erste Deckeleinheit (213A), die ermöglicht, dass eine Öffnung der Empfangseinheit (215) geöffnet und geschlossen wird, und
die zweite Verbindungseinheit einen Verbinder (91) hat, der in der Lage ist, zu gestatten, dass die zweite Energiequellenzufuhreinheit damit verbunden wird, und eine zweite Deckeleinheit (90A), die dem Verbinder (91) erlaubt, zu einem Äußeren hin freigelegt und in dem Fahrzeug aufgenommen zu sein, oder wobei die erste Antriebseinheit (4) eine Brennstoffzelle (1100) ist, die die zweite Energiequelle verwendet, die Wasserstoffelemente enthält, und elektrischen Strom erzeugt,
die zweite Antriebseinheit (MG1) ein Elektromotor (MG1) ist, der Antriebsleistung zum Antreiben eines Rads durch die zweite Energiequelle erzeugt, die als elektrischer Strom identifiziert ist,
die erste Verbindungseinheit eine Empfangseinheit (215) hat, die der ersten Energiequellenzufuhreinheit (191) ermöglicht, damit verbunden zu werden, und eine erste Deckeleinheit (213A), die einer Öffnung der Empfangseinheit (215) gestattet, geöffnet und geschlossen zu werden, und
die zweite Verbindungseinheit einen Verbinder (91) hat, der in der Lage ist, der zweiten Energiequellenzufuhreinheit zu gestatten, damit verbunden zu werden, und eine zweite Deckeleinheit (90A), die dem Verbinder (91) gestattet, zu einem Äußeren hin freigelegt und in dem Fahrzeug aufgenommen zu sein.

14. Fahrzeug mit:
einer Stromerzeugungseinheit, die durch eine erste Energiequelle elektrischen Strom erzeugt;
einer ersten Halteeinheit (201), die die erste Energiequelle hält;
einer ersten Verbindungseinheit (213), die einer ersten Energiequellenzufuhreinheit (191) gestattet, damit verbunden zu werden, und die von der ersten Energiequellenzufuhreinheit (191) zugeführte erste Energiequelle zu der ersten Halteeinheit (201) führt;
einer Antriebseinheit (MG1, MG2), die durch eine zweite Energiequelle angetrieben ist, die zu der ersten Energiequelle unterschiedlich ist;
einer zweiten Halteeinheit (B), die die zweite Energiequelle hält; und
einer zweiten Verbindungseinheit (90), die einer zweiten Energiequellenzufuhreinheit (190) ermöglicht, damit verbunden zu sein, und die zweite Energiequelle, die von der zweiten Energiequellenzufuhreinheit (190) zugeführt wird, zu der zweiten Halteeinheit (B) zuführen, wobei
die eine erste Verbindungseinheit (213) an einer seitlichen Fläche des Fahrzeugs bereitgestellt ist, und die eine zweite Verbindungseinheit (90) an der anderen seitlichen Fläche des Fahrzeugs bereitgestellt ist, wobei die eine seitliche Fläche und die andere seitliche Fläche in einer Richtung des Fahrzeugs der Breite nach angeordnet sind und wobei keine weiteren Verbindungseinheiten (90, 213) bereitgestellt sind.

15. Fahrzeug nach Anspruch 14, wobei
die eine zweite Verbindungseinheit (90) der zweiten Energiequelle, die in der zweiten Halteeinheit (B) gespeichert ist, ermöglicht, zu einem Äußeren von der zweiten Energiequellenzufuhreinheit (190) zugeführt zu werden.

## Revendications

1. Véhicule comportant :
une première unité d'entraînement (4) entraînée par une première source d'énergie ;
une première unité de réservoir (201) qui stocke ladite première source d'énergie ;
une première unité de raccordement (213) qui permet à une unité d'alimentation en première source d'énergie (191) d'y être reliée, et qui guide ladite première source d'énergie délivrée à partir de ladite unité d'alimentation en première source d'énergie (191) vers ladite première unité de réservoir (201) ;
une deuxième unité d'entraînement (MG1, MG2) entraînée par une deuxième source d'énergie différente de ladite première source d'énergie ;
une deuxième unité de réservoir (B) qui stocke ladite deuxième source d'énergie ; et
une deuxième unité de raccordement (90) qui permet à une unité d'alimentation en deuxième source d'énergie (190) d'y être reliée, et qui guide ladite deuxième source d'énergie délivrée à partir de ladite unité d'alimentation en deuxième source d'énergie (190) vers ladite deuxième unité de réservoir (B),
ladite première unité de raccordement (213) étant prévue sur une première surface latérale dudit véhicule et ladite deuxième unité de raccordement (90) étant prévue sur l'autre surface latérale dudit véhicule, ladite première surface latérale et ladite autre surface latérale étant disposées dans une direction de largeur dudit véhicule et il n'y a pas d'autres unités de raccordement (90, 213) prévues.

2. Véhicule selon la revendication 1, dans lequel
ladite deuxième unité de raccordement (90) permet à ladite deuxième source d'énergie stockée dans ladite deuxième unité de réservoir (B) d'être délivrée vers l'extérieur par rapport à ladite deuxième unité d'alimentation en source d'énergie (190).

3. Véhicule selon la revendication 1 ou 2, dans lequel
ladite première unité d'entraînement (4) est un moteur à combustion interne (4) entraîné par ladite première source d'énergie identifiée comme du carburant, et générant une puissance d'entraînement, et
ladite deuxième unité d'entraînement (MG1, MG2) est un moteur électrique entraîné par ladite deuxième source d'énergie identifiée puissance électrique, et générant une puissance d'entraînement afin d'entraîner une roue, ou dans lequel
ladite première unité d'entraînement (4) est une unité de génération de puissance utilisant ladite première source d'énergie identifiée comme du carburant, et générant de la puissance électrique, et
ladite deuxième unité d'entraînement (MG1, MG2) est un moteur électrique (MG1, MG2) générant une puissance d'entraînement afin d'entraîner une roue, grâce à ladite deuxième source d'énergie identifiée comme une puissance électrique, ou dans lequel
ladite première unité d'entraînement (4) est une unité de génération de puissance utilisant ladite première source d'énergie identifiée comme du carburant, et générant de la puissance électrique,
ladite deuxième unité d'entraînement (MG1) est un moteur électrique (MG1) générant une puissance d'entraînement afin d'entraîner une roue, grâce à ladite deuxième source d'énergie identifiée comme une puissance électrique, et
ladite unité de génération de puissance comprend un moteur à combustion interne (4) entraîné par ladite première source d'énergie identifiée comme du carburant, et un moteur électrique de génération de puissance (MG2) entraîné par la puissance d'entraînement obtenue à partir dudit moteur à combustion interne (4).

4. Véhicule selon la revendication 1 ou 2, dans lequel ladite première unité de raccordement (213) et ladite deuxième unité de raccordement (90) sont opposées dans la direction de largeur dudit véhicule.

5. Véhicule selon la revendication 1 ou 2, dans lequel
ladite première unité d'entraînement (4) est un moteur à combustion interne (4) entraîné par ladite première source d'énergie identifiée comme du carburant, et générant de la puissance d'entraînement,
ladite deuxième unité d'entraînement (MG1) est un moteur électrique (MG1) entraîné par ladite deuxième source d'énergie identifiée comme une puissance électrique, et générant de la puissance d'entraînement afin d'entraîner une roue,
le véhicule comporte en outre un compartiment à passager recevant un passager,
ledit moteur électrique (MG1) et ledit moteur à combustion interne (4) sont prévus vers l'avant dans une direction de déplacement (D) par rapport au dit compartiment à passager, et
ladite première unité de réservoir (201), ladite deuxième unité de réservoir (B), ladite première unité de raccordement (213), et ladite deuxième unité de raccordement (90) sont prévues vers l'arrière dans la direction de déplacement (D) par rapport au dit moteur électrique (MG1) et au dit moteur à combustion interne (4).

6. Véhicule selon la revendication 1 ou 2, comportant en outre
un compartiment à passager recevant un passager, et une ouverture de chargement et de déchargement (212R, 212L) en communication avec ledit compartiment à passager, dans lequel
ladite première unité de raccordement (213) et ladite deuxième unité de raccordement (90) sont disposées vers l'arrière dans une direction de déplacement par rapport à ladite ouverture de chargement et de déchargement.

7. Véhicule selon la revendication 1 ou 2, comportant en outre
un compartiment à passager recevant un passager,
une ouverture de chargement et de déchargement (212R, 212L) en communication avec ledit compartiment à passager, et
une roue, dans lequel
ladite roue comprend une roue avant (2F) disposée vers l'avant dans une direction de déplacement (D) par rapport à ladite ouverture de chargement et de déchargement (212R, 212L), et une roue arrière (2R) disposée vers l'arrière dans la direction de déplacement par rapport à ladite ouverture de chargement et de déchargement (212R, 212L), et
ladite deuxième unité de raccordement (90) est disposée vers le haut par rapport à ladite roue arrière (2R).

8. Véhicule selon la revendication 1, dans lequel
ladite deuxième source d'énergie est de la puissance électrique,
ladite deuxième unité de réservoir (B) est un dispositif de stockage de puissance (B) qui stocke ladite deuxième source d'énergie identifiée comme une puissance électrique à courant continu,
le véhicule comporte en outre un convertisseur (400)
reliant ladite deuxième unité de raccordement (90) et ledit dispositif de stockage de puissance (B),
convertissant ladite deuxième source d'énergie qui est délivrée à partir de ladite unité d'alimentation en deuxième source d'énergie et identifiée comme de la puissance électrique à courant alternatif en ladite deuxième source d'énergie identifiée comme de la puissance électrique à courant continu, et
délivrant la puissance électrique à courant continu au dit dispositif de stockage de puissance (B), et
ledit convertisseur (400) est disposé sur une périphérie dudit dispositif de stockage de puissance (B), ou dans lequel
ladite deuxième source d'énergie est de la puissance électrique,
ladite deuxième unité de réservoir (B) est un dispositif de stockage de puissance (B) qui stocke ladite deuxième source d'énergie identifiée comme une puissance électrique à courant continu,
ladite deuxième unité d'entraînement (MG1, MG2) est un moteur électrique (MG1, MG2) entraîné par ladite deuxième source d'énergie identifiée comme une puissance électrique à courant alternatif,
ledit moteur électrique (MG1, MG2) comprend un premier moteur électrique (MG1) ayant un premier fil d'enroulement multiphasé (11) et un premier point neutre (M1) du premier fil d'enroulement multiphasé (11), et un deuxième moteur électrique (MG2) ayant un deuxième fil d'enroulement multiphasé (12) et un deuxième point neutre (M2) du deuxième fil d'enroulement multiphasé (12),
ladite deuxième unité de raccordement (90) comprend une première interconnexion (92B) reliée au dit premier point neutre (M1), et une deuxième interconnexion (92A) reliée au dit deuxième point neutre (M2),
le véhicule comporte en outre
un premier inverseur (30) convertissant ladite deuxième source d'énergie qui est délivrée à partir dudit dispositif de stockage de puissance (B) et identifiée comme de la puissance électrique à courant continu en ladite deuxième source d'énergie identifiée comme de la puissance électrique à courant alternatif, et délivrant la puissance électrique à courant alternatif au dit premier moteur électrique (MG1),
un deuxième inverseur (40) convertissant ladite deuxième source d'énergie qui est délivrée à partir dudit dispositif de stockage de puissance (B) et identifiée comme de la puissance électrique à courant continu en ladite deuxième source d'énergie identifiée comme de la puissance électrique à courant alternatif, et délivrant la puissance électrique à courant alternatif au dit deuxième moteur électrique (MG2), et
une unité de commande d'inverseur (70) qui commande lesdits premier et deuxième inverseurs (30, 40), et
l'unité de commande d'inverseur (70) commande lesdits premier et deuxième inverseurs (30, 40) de telle sorte que de la puissance électrique à courant alternatif délivrée à partir de ladite deuxième unité de raccordement (90) au dit premier et deuxième points neutres (M1, M2) est convertie en puissance électrique à courant continu et délivrée au dit dispositif de stockage de puissance (B).

9. Véhicule selon la revendication 2, dans lequel
ladite deuxième source d'énergie est de la puissance électrique,
ladite deuxième unité de réservoir (B) est un dispositif de stockage de puissance (B) qui stocke ladite deuxième source d'énergie identifiée comme une puissance électrique à courant continu,
le véhicule comporte en outre un convertisseur (400)
reliant ladite deuxième unité de raccordement (90) et ledit dispositif de stockage de puissance (B),
convertissant ladite deuxième source d'énergie qui est qui est stockée dans ledit dispositif de stockage de puissance (B) et identifiée comme de la puissance électrique à courant continu en ladite deuxième source d'énergie identifiée comme de la puissance électrique à courant alternatif, et
délivrant la puissance électrique à courant alternatif à ladite unité d'alimentation en deuxième source d'énergie (190), et
ledit convertisseur (400) est disposé sur une périphérie dudit dispositif de stockage de puissance (B), ou dans lequel
ladite deuxième source d'énergie est de la puissance électrique,
ladite deuxième unité de réservoir (B) est un dispositif de stockage de puissance (B) qui stocke ladite deuxième source d'énergie identifiée comme une puissance électrique à courant continu,
ladite deuxième unité d'entraînement (MG1, MG2) est un moteur électrique (MG1, MG2) entraîné par ladite deuxième source d'énergie identifiée comme une puissance électrique à courant alternatif,
ledit moteur électrique (MG1, MG2) comprend un premier moteur électrique (MG1) ayant un premier fil d'enroulement multiphasé (11) et un premier point neutre (M1) du premier fil d'enroulement multiphasé (11), et un deuxième moteur électrique (MG2) ayant un deuxième fil d'enroulement multiphasé (12) et un deuxième point neutre (M2) du deuxième fil d'enroulement multiphasé (12),
ladite deuxième unité de raccordement (90) comprend une première interconnexion (92B) reliée au dit premier point neutre (M1), et une deuxième interconnexion (92A) reliée au dit deuxième point neutre (M2),
le véhicule comporte en outre
un premier inverseur (30) convertissant ladite deuxième source d'énergie qui est délivrée à partir dudit dispositif de stockage de puissance (B) et identifiée comme de la puissance électrique à courant continu en ladite deuxième source d'énergie identifiée comme de la puissance électrique à courant alternatif, et délivrant la puissance électrique à courant alternatif au dit premier moteur électrique (MG1),
un deuxième inverseur (40) convertissant ladite deuxième source d'énergie qui est délivrée à partir dudit dispositif de stockage de puissance (B) et identifiée comme de la puissance électrique à courant continu en ladite deuxième source d'énergie identifiée comme de la puissance électrique à courant alternatif, et délivrant la puissance électrique à courant alternatif au dit premier moteur électrique (MG1), et
une unité de commande d'inverseur (70) qui commande lesdits premier et deuxième inverseurs (30, 40), et
ladite unité de commande d'inverseur (70) commande ledit premier inverseur et ledit deuxième inverseur (30, 40) de façon à convertir de la puissance électrique à courant continu qui est délivrée à partir dudit dispositif de stockage de puissance (B) au dit premier inverseur et au dit deuxième inverseur (30, 40) en puissance électrique à courant alternatif, et à délivrer ladite puissance électrique à courant alternatif à une charge externe à partir de ladite deuxième unité de raccordement (90).

10. Véhicule selon la revendication 1 ou 2, dans lequel ladite première unité de raccordement et ladite deuxième unité de raccordement sont disposées de façon à être symétrique en ligne l'une par rapport à l'autre par rapport à un axe dudit véhicule, l'axe s'étendant dans une direction d'avant en arrière du véhicule.

11. Véhicule selon la revendication 1 ou 2, comportant en outre
un compartiment à passager recevant un passager, et
une ouverture de chargement et de déchargement (212R, 212L) en communication avec ledit compartiment à passager, dans lequel
ladite première unité de raccordement et ladite deuxième unité de raccordement sont disposées dans une section avant du véhicule par rapport à ladite ouverture de chargement et de déchargement.

12. Véhicule selon la revendication 1 ou 2, comportant en outre un compartiment à passager (CR) recevant un passager, dans lequel
une de ladite première unité de raccordement et ladite deuxième unité de raccordement est disposée vers l'avant par rapport au dit compartiment à passager (CR), et l'autre de ladite première unité de raccordement et ladite deuxième unité de raccordement est disposée vers l'arrière par rapport au dit compartiment à passager (CR).

13. Véhicule selon la revendication 1 ou 2, dans lequel
ladite première unité d'entraînement (4) est une unité de génération de puissance utilisant ladite première source d'énergie identifiée comme du carburant, et générant de la puissance électrique,
ladite unité de génération de puissance comprend un moteur à combustion interne (4) entraîné par ladite première source d'énergie identifiée comme du carburant, et un moteur électrique de génération de puissance (MG2) entraîné par la puissance d'entraînement obtenue à partir dudit moteur à combustion interne (4),
ladite deuxième unité d'entraînement (MG1) est un moteur électrique (MG1) générant de la puissance d'entraînement afin d'entraîner une roue, par ladite deuxième source d'énergie identifiée comme une puissance électrique,
ladite première unité de raccordement comprend une unité de réception (215) permettant à ladite unité d'alimentation en première source d'énergie (191) d'y être reliée, et une première unité de capot (213A) permettant à une ouverture de l'unité de réception (215) d'être ouverte et fermée, et
ladite deuxième unité de raccordement comprend un connecteur (91) capable de permettre à l'unité d'alimentation en deuxième source d'énergie d'y être reliée, et une deuxième unité de capot (90A) permettant au dit connecteur (91) d'être exposé à l'extérieur et d'être reçu dans le véhicule, ou dans lequel
ladite première unité d'entraînement (4) est une pile à combustible (1100) utilisant ladite deuxième source d'énergie contenant des éléments hydrogène, et générant de la puissance électrique,
ladite deuxième unité d'entraînement (MG1) est un moteur électrique (MG1) générant de la puissance d'entraînement afin d'entraîner une roue, grâce à ladite deuxième source d'énergie identifiée comme une puissance électrique,
ladite première unité de raccordement comprend une unité de réception (215) permettant à ladite unité d'alimentation en première source d'énergie (191) d'y être reliée, et une première unité de capot (213A) permettant à une ouverture de l'unité de réception (215) d'être ouverte et fermée, et
ladite deuxième unité de raccordement comprend un connecteur (91) capable de permettre à l'unité d'alimentation en deuxième source d'énergie d'y être reliée, et une deuxième unité de capot (90A) permettant au dit connecteur (91) d'être exposé à l'extérieur et d'être reçu dans le véhicule.

14. Véhicule comportant :
une unité de génération d'énergie qui génère de la puissance électrique grâce à une première source d'énergie ;
une première unité de réservoir (201) qui stocke ladite première source d'énergie ;
une première unité de raccordement (213) qui permet à une unité d'alimentation en première source d'énergie (191) d'y être reliée, et qui guide ladite première source d'énergie délivrée à partir de ladite unité d'alimentation en première source d'énergie (191) vers ladite première unité de réservoir (201) ;
une unité d'entraînement (MG1, MG2) entraînée par une deuxième source d'énergie différente de ladite première source d'énergie ;
une deuxième unité de réservoir (B) qui stocke ladite deuxième source d'énergie ; et
une deuxième unité de raccordement (90) qui permet à une unité d'alimentation en deuxième source d'énergie (190) d'y être reliée, et qui guide ladite deuxième source d'énergie délivrée à partir de ladite unité d'alimentation en deuxième source d'énergie (190) vers ladite deuxième unité de réservoir (B),
ladite première unité de raccordement (213) étant prévue sur une première surface latérale dudit véhicule, et ladite deuxième unité de raccordement (90) étant prévue sur l'autre surface latérale dudit véhicule, ladite première surface latérale et ladite autre surface latérale étant disposées dans une direction de largeur dudit véhicule, et il n'y a pas d'autres unités de raccordement (90, 213) prévues.

15. Véhicule selon la revendication 14, dans lequel
ladite deuxième unité de raccordement (90) permet à ladite deuxième source d'énergie stockée dans ladite deuxième unité de réservoir (B) d'être délivrée à l'extérieur à partir de ladite unité d'alimentation en deuxième source d'énergie (190).
